# EUROPEAN PATENT APPLICATION

(11) **EP 4 730 716 A1**
(43) Date of publication of application: **22.04.2026**
(21) Application number: 24838780.5
(22) Date of filing: 08.07.2024
(51) Int. Cl.: H04L 12/18

(54) **DATA TRANSMISSION METHOD AND APPARATUS, DEVICE, SYSTEM, AND STORAGE MEDIUM**

(30) Priority: 12.07.2023 CN 202310859386
(71) Applicant: Huawei Technologies Co., Ltd., Shenzhen, Guangdong 518129 (CN)
(72) Inventor: HU, Wei, Shenzhen, Guangdong 518129 (CN); TONG, Shaojun, Shenzhen, Guangdong 518129 (CN); ZHU, Jianjian, Shenzhen, Guangdong 518129 (CN); YUAN, Peng, Shenzhen, Guangdong 518129 (CN)
(74) Representative: Maiwald GmbH
(86) International application number: PCT/CN2024/104273
(87) International publication number: WO 2025/011527

(57) **Abstract**

This application discloses a data transmission method, apparatus, device, and system, and a storage medium, and relates to the field of communication technologies. An example in which a first device performs the method is used. The first device sends common data to a plurality of second devices through one multicast channel, where the common data is same data; and separately sends corresponding differential data to the plurality of second devices through a plurality of unicast channels, where the respective differential data of the plurality of second devices is different. In the method, one-to-many transmission of common data is implemented through the one multicast channel, so that transmission efficiency of the common data is improved, and resource overheads for transmitting the common data are low; and one-to-many transmission of differential data is implemented through the plurality of unicast channels, so that data types for one-to-many data transmission are richer. In addition, different second devices can perform different personalized operations based on the differential data. Therefore, the method can better meet requirements of diversified one-to-many data transmission scenarios.

## Description

This application claims priority to Chinese Patent Application No. 202310859386.0, filed with the China National Intellectual Property Administration on July 12, 2023 and entitled "DATA TRANSMISSION METHOD, APPARATUS, DEVICE, AND SYSTEM, AND STORAGE MEDIUM", which is incorporated herein by reference in its entirety.

### TECHNICAL FIELD

This application relates to the field of communication technologies, and in particular, to a data transmission method, apparatus, device, and system, and a storage medium.

### BACKGROUND

With development of communication technologies, a one-to-many data transmission scenario becomes increasingly common. One-to-many data transmission means that one sending device transmits data to a plurality of receiving devices, and the transmitted data may include same common data or different differential data. For example, in an intelligent cockpit scenario of a vehicle, a central control device of the vehicle projects a video to a plurality of rear-seat devices of the vehicle for playing, picture content of the video is common data, and video progress, volume, subtitles, and the like that are controlled by different passengers for different rear-seat devices and picture adaptation data corresponding to the rear-seat devices of different screen sizes are differential data.

Therefore, in the one-to-many data transmission scenario, how to transmit the common data and the differential data is an urgent problem to be resolved.

### SUMMARY

This application provides a data transmission method, apparatus, device, and system, and a storage medium, to transmit common data and differential data in a one-to-many manner.

According to a first aspect, a data transmission method is provided. An example in which a first device performs the method is used. The first device sends common data to a plurality of second devices through one multicast channel, where the common data is same data; and the first device separately sends corresponding differential data to the plurality of second devices through a plurality of unicast channels, where the respective differential data of the plurality of second devices is different.

In the method, the first device implements one-to-many transmission of common data through the one multicast channel, so that transmission efficiency of the common data is improved, and resource overheads for transmitting the common data are low. On this basis, in the method, one-to-many transmission of differential data is implemented through the plurality of unicast channels, so that both the common data and differential data can be transmitted in a one-to-many data transmission scenario, and data types for one-to-many data transmission are richer. In addition, different second devices can perform different personalized operations based on the differential data. Therefore, the method can better meet requirements of diversified one-to-many data transmission scenarios.

One unicast channel may correspond to one second device. In other words, a quantity of the plurality of unicast channels is the same as a quantity of the plurality of second devices. The first device corresponds to a sending device in the one-to-many data transmission scenario, and the plurality of second devices correspond to a plurality of receiving devices in the one-to-many data transmission scenario. An execution sequence in which the first device sends the common data to the plurality of second devices through the one multicast channel and the first device separately sends the corresponding differential data to the plurality of second devices through the plurality of unicast channels is not limited. Optionally, the first device may simultaneously send the common data to the plurality of second devices through the one multicast channel and separately send the corresponding differential data to the plurality of second devices through the plurality of unicast channels. That the respective differential data of the plurality of second devices is different may mean that the respective differential data of the plurality of second devices is completely different; or may mean that the respective differential data of the plurality of second devices is partially different, and different parts of the differential data of the plurality of second devices are also different.

In a possible implementation, in addition to separately sending the corresponding differential data to the plurality of second devices through the plurality of unicast channels, the first device separately sends corresponding retransmission data to the plurality of second devices through the plurality of unicast channels. The retransmission data is at least one of common data or differential data that needs to be retransmitted by different second devices. Because a packet loss may occur in the common data transmitted through the multicast channel, the common data in which the packet loss occurs is retransmitted. In addition, common data that needs to be retransmitted by different second devices may be different. Therefore, retransmission data corresponding to different second devices is transmitted through unicast channels corresponding to the different second devices. In this application, the retransmission data is transmitted through the plurality of unicast channels for transmitting the differential data, and there is no need to additionally establish an independent unicast channel for transmitting the retransmission data. This ensures transmission quality of the common data through retransmission, can further avoid resource overheads caused by establishing the additional unicast channel, and improves data transmission efficiency.

In a possible implementation, a packet in which the differential data is located carries a first differential identifier, and the first differential identifier is used by the plurality of second devices to identify the differential data received through the unicast channels; and a packet in which the common data is located carries a first common identifier, and the first common identifier is used by the plurality of second devices to identify the common data received through the unicast channels. When the retransmission data transmitted through the unicast channel includes the retransmitted common data, the first device transmits both the differential data and the retransmitted common data through the unicast channel. Therefore, the first differential identifier is carried in the packet in which the differential data is located, and the first common identifier is carried in the packet in which the common data is located, so that the second device on a receiving side identifies whether data corresponding to a packet received through the unicast channel is the common data or the differential data.

In a possible implementation, the first device stores indication information corresponding to each of the plurality of second devices, the indication information indicates a storage position of common data that has been sent but has not been acknowledged, and the indication information corresponds to an identifier of the common data that has been sent but has not been acknowledged. Because the common data sent by the first device to the plurality of second devices is the same, if the common data that has been sent but has not been acknowledged and that corresponds to each of the plurality of second devices is directly stored, the common data that has been sent but has not been acknowledged is copied and stored a plurality of times, resulting in high resource overheads. In this application, the indication information is stored, and the indication information indicates the storage position of the common data that has been sent but has not been acknowledged, to effectively reduce resource overheads.

In a possible implementation, after sending the common data to the plurality of second devices through the one multicast channel, the first device receives a packet loss request packet through a first unicast channel that corresponds to a third device and that is in the plurality of unicast channels, where the third device is any one of the plurality of second devices; and when the packet loss request packet includes a second common identifier and a first identifier of the common data that needs to be retransmitted, obtains, based on the common data indicated by the second common identifier, first indication information corresponding to the first identifier from indication information corresponding to the third device, and uses, as retransmission data corresponding to the first unicast channel, common data stored at a storage position indicated by the first indication information. The retransmitted common data in the retransmission data corresponding to different unicast channels can be obtained by using the received packet loss request packet. This ensures accuracy of obtaining the retransmission data. Accurate transmission of the retransmission data resolves a packet loss problem of data transmission, thereby improving transmission quality of data transmission.

In a possible implementation, the first device further stores differential data that has been sent but has not been acknowledged and that corresponds to each of the plurality of second devices. In this case, for the packet loss request packet received through the first unicast channel that corresponds to the third device and that is in the plurality of unicast channels, when the packet loss request packet includes a second differential identifier and a second identifier of the differential data that needs to be retransmitted, the first device obtains, based on the differential data indicated by the second differential identifier, the differential data corresponding to the second identifier from differential data that has been sent but has not been acknowledged and that corresponds to the third device, and uses, as the retransmission data corresponding to the first unicast channel, the differential data corresponding to the second identifier. The retransmitted differential data in the retransmission data corresponding to different unicast channels can be obtained by using the received packet loss request packet. This ensures accuracy of obtaining the retransmission data. Accurate transmission of the retransmission data resolves a packet loss problem of data transmission, thereby improving transmission quality of data transmission.

In a possible implementation, after sending the common data to the plurality of second devices through the one multicast channel, the first device receives an acknowledgment packet through a second unicast channel that corresponds to a fourth device and that is in the plurality of unicast channels, where the fourth device is any one of the plurality of second devices; when the acknowledgment packet includes a third common identifier and a third identifier of the received common data, deletes, based on the common data indicated by the third common identifier, second indication information corresponding to the third identifier from indication information corresponding to the fourth device; and when a plurality of acknowledgment packets are respectively received through the plurality of unicast channels, and the plurality of acknowledgment packets each include the third identifier, deletes common data stored at a storage position indicated by the second indication information. Indication information stored in a multicast unacknowledged storage unit is deleted in time based on the received acknowledgment packet, and the stored common data is deleted in time based on the received plurality of acknowledgment packets, so that storage space of the first device can be saved.

In a possible implementation, for the acknowledgment packet received through the second unicast channel that corresponds to the fourth device and that is in the plurality of unicast channels, when the acknowledgment packet includes a third differential identifier and a fourth identifier of the received differential data, the first device deletes, based on the differential data indicated by the third differential identifier, the differential data corresponding to the fourth identifier from differential data that has been sent but has not been acknowledged and that corresponds to the fourth device, so that storage space of the first device can be saved.

In the one-to-many data transmission scenario, the first device sends the differential data to the plurality of second devices. In addition, any second device may further send differential data to the first device. In other words, the first device exchanges different differential data with the plurality of second devices. Optionally, the differential data sent by the first device to the plurality of second devices is referred to as first differential data, and the differential data sent by the any second device to the first device is referred to as second differential data. In this case, the second differential data is different data sent by different second devices to the first device.

In a possible implementation, the first device receives, through a third unicast channel that corresponds to a fifth device and that is in the plurality of unicast channels, second differential data sent by the fifth device, where the fifth device is any one of the plurality of second devices. In this way, the first device and the plurality of second devices may transmit the differential data to each other. This improves transmission flexibility of the differential data, and meets more diversified one-to-many data transmission scenarios. In addition, the unicast channel used by the first device to transmit the first differential data and the retransmission data to the second device may be further used by the second device to transmit the second differential data to the first device. This further improves utilization of the unicast channel and reduces resource overheads caused by data transmission.

According to a second aspect, a data transmission method is provided. An example in which a second device performs the method is used. The second device receives, through a multicast channel, common data sent by a first device, where the second device is one of a plurality of devices that receive the common data, and the common data is same data; and the second device receives, through a unicast channel, differential data sent by the first device, where respective differential data of the plurality of devices is different.

The plurality of devices in the second aspect correspond to the plurality of second devices in the first aspect, that is, the second device is any one of the plurality of second devices. The common data and the differential data are respectively received through the multicast channel and the unicast channel, to implement transmission of the common data and the differential data in a one-to-many data transmission scenario, so that data types for one-to-many data transmission are richer. In addition, the second device can perform different personalized operations based on the differential data. Therefore, the method can better meet requirements of diversified one-to-many data transmission scenarios.

In a possible implementation, the second device receives, through the unicast channel, the differential data sent by the first device. In addition, the second device may further receive, through the unicast channel, retransmission data sent by the first device. The retransmission data is at least one of common data or differential data that needs to be retransmitted by the second device. The retransmission data is received through the unicast channel for receiving the differential data, so that the differential data and the retransmission data can be transmitted through the same unicast channel, and there is no need to additionally establish an independent unicast channel for transmitting the retransmission data. This ensures transmission quality of the common data through retransmission, can further avoid resource overheads caused by establishing the additional unicast channel, and improves data transmission efficiency.

In a possible implementation, a packet in which the common data received through the unicast channel is located carries a first common identifier, and a packet in which the differential data received through the unicast channel is located carries a first differential identifier; and the method further includes: storing the common data received through the multicast channel; and identifying, based on the first common identifier and the first differential identifier, the packet received through the unicast channel, and separately storing the common data and the differential data that are obtained through identification. By using the first common identifier and the first differential identifier, the second device can accurately identify whether the common data or the differential data is received through the unicast channel, so that accuracy of receiving data is improved.

In a possible implementation, when it is determined that common data corresponding to a first identifier needs to be retransmitted, a packet loss request packet including a second common identifier and the first identifier of the common data that needs to be retransmitted may be returned to the first device through the unicast channel; and when it is determined that common data corresponding to a third identifier is received, an acknowledgment packet including a third common identifier and the third identifier of the received common data may be returned to the first device through the unicast channel. By using feedback of the packet loss request packet including the second common identifier and the acknowledgment packet including the second common identifier, the first device can determine a receiving status of the common data, so that lost packet retransmission of the common data can be implemented, and transmission quality of the common data is improved.

In a possible implementation, when it is determined that differential data corresponding to a second identifier needs to be retransmitted, a packet loss request packet including a second differential identifier and the second identifier of the differential data that needs to be retransmitted may be returned to the first device through the unicast channel; and when it is determined that differential data corresponding to a fourth identifier is received, an acknowledgment packet including a third differential identifier and the fourth identifier of the received differential data may be returned to the first device through the unicast channel. By using feedback of the packet loss request packet including the second differential identifier and the acknowledgment packet including the third differential identifier, the first device can determine a receiving status of the differential data, so that lost packet retransmission of the differential data can be implemented, and transmission quality of the differential data is improved.

In the one-to-many data transmission scenario, the second device receives the differential data sent by the first device. In addition, the second device may further send differential data to the first device. In other words, the second device and the first device exchange different differential data. Optionally, the differential data that is sent by the first device and received by the second device is referred to as first differential data, and the differential data that is sent by the second device to the first device is referred to as second differential data. In this case, the second differential data is different data sent by different second devices to the first device.

In a possible implementation, the second device receives, through the unicast channel, the differential data or the retransmission data sent by the first device. In addition, the second device may further send the second differential data to the first device through the unicast channel. Optionally, after sending the second differential data to the first device through the unicast channel, the second device may further store second differential data that has been sent but has not been acknowledged. In this way, the second device and the first device may transmit the differential data to each other. This improves transmission flexibility of the differential data, and meets more diversified one-to-many data transmission scenarios. In addition, the unicast channel used by the second device to receive the first differential data and the retransmission data that are sent by the first device may be further used by the second device to transmit the second differential data to the first device. This further improves utilization of the unicast channel and reduces resource overheads caused by data transmission.

According to a third aspect, a data transmission apparatus is provided. The apparatus is used in a first device, and the apparatus includes:
a transceiver module, configured to perform a receiving-related operation and/or a sending-related operation in any one of the first aspect or the possible implementations of the first aspect; and
a processing module, configured to perform an operation other than the receiving-related operation and/or the sending-related operation in any one of the first aspect or the possible implementations of the first aspect.

In a possible implementation, the transceiver module includes a receiving module and/or a sending module. The receiving module is configured to perform the receiving-related operation, and the sending module is configured to perform the sending-related operation.

In a possible implementation, the transceiver module is configured to: send common data to a plurality of second devices through one multicast channel, where the common data is same data; and separately send corresponding differential data to the plurality of second devices through a plurality of unicast channels, where the respective differential data of the plurality of devices is different.

In a possible implementation, the transceiver module is further configured to separately send corresponding retransmission data to the plurality of second devices through the plurality of unicast channels. The retransmission data is at least one of common data or differential data that needs to be retransmitted by different second devices.

In a possible implementation, a packet in which the differential data is located carries a first differential identifier, and the first differential identifier is used by the plurality of second devices to identify the differential data received through the unicast channels; and a packet in which the common data is located carries a first common identifier, and the first common identifier is used by the plurality of second devices to identify the common data received through the unicast channels.

In a possible implementation, the first device stores indication information corresponding to each of the plurality of second devices and differential data that has been sent but has not been acknowledged, the indication information indicates a storage position of common data that has been sent but has not been acknowledged, and the indication information corresponds to an identifier of the common data that has been sent but has not been acknowledged.

The transceiver module is further configured to: receive a packet loss request packet through a first unicast channel that corresponds to a third device and that is in the plurality of unicast channels, where the third device is any one of the plurality of second devices; when the packet loss request packet includes a second common identifier and a first identifier of the common data that needs to be retransmitted, obtain, based on the common data indicated by the second common identifier, first indication information corresponding to the first identifier from indication information corresponding to the third device, and use, as retransmission data corresponding to the first unicast channel, common data stored at a storage position indicated by the first indication information; and when the packet loss request packet includes a second differential identifier and a second identifier of the differential data that needs to be retransmitted, obtain, based on the differential data indicated by the second differential identifier, the differential data corresponding to the second identifier from differential data that has been sent but has not been acknowledged and that corresponds to the third device, and use, as the retransmission data corresponding to the first unicast channel, the differential data corresponding to the second identifier.

In a possible implementation, the transceiver module is further configured to: receive an acknowledgment packet through a second unicast channel that corresponds to a fourth device and that is in the plurality of unicast channels, where the fourth device is any one of the plurality of second devices; when the acknowledgment packet includes a third common identifier and a third identifier of the received common data, delete, based on the common data indicated by the third common identifier, second indication information corresponding to the third identifier from indication information corresponding to the fourth device; when the acknowledgment packet includes a third differential identifier and a fourth identifier of the received differential data, delete, based on the differential data indicated by the third differential identifier, the differential data corresponding to the fourth identifier from differential data that has been sent but has not been acknowledged and that corresponds to the fourth device; and when a plurality of acknowledgment packets are respectively received through the plurality of unicast channels, and the plurality of acknowledgment packets each include the third common identifier and the third identifier, delete common data stored at a storage position indicated by the second indication information.

According to a fourth aspect, a data transmission apparatus is provided. The apparatus is used in a second device, and the apparatus includes:
a transceiver module, configured to perform a receiving-related operation and/or a sending-related operation in any one of the second aspect or possible implementations of the second aspect; and
a processing module, configured to perform an operation other than the receiving-related operation and/or the sending-related operation in any one of the second aspect or possible implementations of the second aspect.

In a possible implementation, the transceiver module is configured to: receive, through a multicast channel, common data sent by a first device, where the common data is same data; and receive, through a unicast channel, differential data sent by the first device, where respective differential data of a plurality of devices is different.

In a possible implementation, the transceiver module is further configured to receive, through the unicast channel, retransmission data sent by the first device, where the retransmission data is at least one of common data or differential data that needs to be retransmitted by the second device.

In a possible implementation, a packet in which the common data received through the unicast channel is located carries a first common identifier, and a packet in which the differential data received through the unicast channel is located carries a first differential identifier. The processing module is configured to: store the common data received through the multicast channel; and identify, based on the first common identifier and the first differential identifier, the packet received through the unicast channel, and separately store the common data and the differential data that are obtained through identification.

In a possible implementation, the transceiver module is further configured to: when it is determined that common data corresponding to a first identifier needs to be retransmitted, return, to the first device through the unicast channel, a packet loss request packet including a second common identifier and the first identifier of the common data that needs to be retransmitted; and when it is determined that common data corresponding to a third identifier is received, return, to the first device through the unicast channel, an acknowledgment packet including a third common identifier and the third identifier of the received common data.

In a possible implementation, the transceiver module is further configured to: when it is determined that differential data corresponding to a second identifier needs to be retransmitted, return, to the first device through the unicast channel, a packet loss request packet including a second differential identifier and the second identifier of the differential data that needs to be retransmitted; and when it is determined that differential data corresponding to a fourth identifier is received, return, to the first device through the unicast channel, an acknowledgment packet including a third differential identifier and the fourth identifier of the received differential data.

According to a fifth aspect, a data transmission device is provided. The data transmission device includes a processor, the processor is coupled to a memory, the memory stores at least one program instruction or code, and the at least one program instruction or code is loaded and executed by the processor, so that the data transmission device implements the data transmission method according to any one of the first aspect or the second aspect.

Optionally, there are one or more processors, and there are one or more memories.

Optionally, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the communication apparatus is caused to perform the method in any one of the first aspect or the possible implementations of the first aspect, or perform the method in any one of the second aspect or the possible implementations of the second aspect.

According to a seventh aspect, a data transmission system is provided. The data transmission system includes a first device and a plurality of second devices.

The first device is configured to perform the method in any one of the first aspect or the possible implementations of the first aspect, and any one of the plurality of second devices is configured to perform the method in any one of the second aspect or the possible implementations of the second aspect.

According to an eighth aspect, a computer-readable storage medium is provided. The storage medium stores at least one instruction, and the instruction is loaded and executed by a processor, so that a computer implements the method in any one of the first aspect or the possible implementations of the first aspect, or implements the method in any one of the second aspect or the possible implementations of the second aspect.

According to a ninth aspect, a computer program (product) is provided. The computer program (product) includes computer program code, and when the computer program code is run by a computer, the computer is caused to perform the methods in the foregoing aspects.

According to a tenth aspect, a chip is provided, including a processor, configured to invoke an instruction from a memory and run the instruction stored in the memory, so that a communication device on which the chip is mounted is caused to perform the methods in the foregoing aspects.

According to an eleventh aspect, another chip is provided, including an input interface, an output interface, a processor, and a memory. The input interface, the output interface, the processor, and the memory are connected through an internal connection path, the processor is configured to execute code in the memory, and when the code is executed, the processor is configured to perform the methods in the foregoing aspects.

It should be understood that, for beneficial effects achieved by the technical solutions in the second aspect to the eleventh aspect and the corresponding possible implementations of this application, refer to the technical effects of the first aspect and the corresponding possible implementations of the first aspect. Details are not described herein again.

### BRIEF DESCRIPTION OF DRAWINGS

FIG. 1 is a diagram of a unicast transmission framework according to an embodiment of this application;
FIG. 2 is a diagram of a multicast transmission framework according to an embodiment of this application;
FIG. 3 is a diagram of a reliable multicast transmission framework according to an embodiment of this application;
FIG. 4 is a diagram of an implementation environment of a data transmission method according to an embodiment of this application;
FIG. 5 is a diagram of a structure of a data transmission device according to an embodiment of this application;
FIG. 6 is a diagram of interaction of a data transmission method according to an embodiment of this application;
FIG. 7 is a flowchart of sending common data and differential data by a first device according to an embodiment of this application;
FIG. 8 is a flowchart of receiving common data and differential data by a second device through a multicast channel according to an embodiment of this application;
FIG. 9 is a flowchart of sending differential data by a second device to a first device according to an embodiment of this application;
FIG. 10 is a flowchart of receiving data by a first device through a unicast channel according to an embodiment of this application;
FIG. 11 is a schematic flowchart of a data transmission method according to an embodiment of this application;
FIG. 12 is a diagram of a scenario of a data transmission method according to an embodiment of this application;
FIG. 13 is a diagram of a structure of a data transmission apparatus according to an embodiment of this application;
FIG. 14 is a diagram of a structure of another data transmission apparatus according to an embodiment of this application; and
FIG. 15 is a diagram of a structure of a data transmission device according to an embodiment of this application.

### DESCRIPTION OF EMBODIMENTS

To make the objectives, technical solutions, and advantages of this application clearer, the following further describes the implementations of this application in detail with reference to the accompanying drawings.

In the field of communication technologies, a plurality of data transmission methods are provided for requirements of a one-to-many data transmission scenario. For example, a one-to-many data transmission scenario is a one-to-many projection scenario. A method used in a related technology includes: performing unicast projection one by one by using a reliable transmission protocol, where the reliable transmission protocol is, for example, a transmission control protocol (transmission control protocol, TCP) or a video transmission protocol (video transmission protocol, VTP); performing multicast projection by using an unreliable transmission protocol, where the unreliable transmission protocol is, for example, a user datagram protocol (user datagram protocol, UDP) or a VTP multicast (VTP multicast, VTPM); performing reliable multicast projection by using a combination of a reliable transmission protocol and an unreliable transmission protocol; or the like.

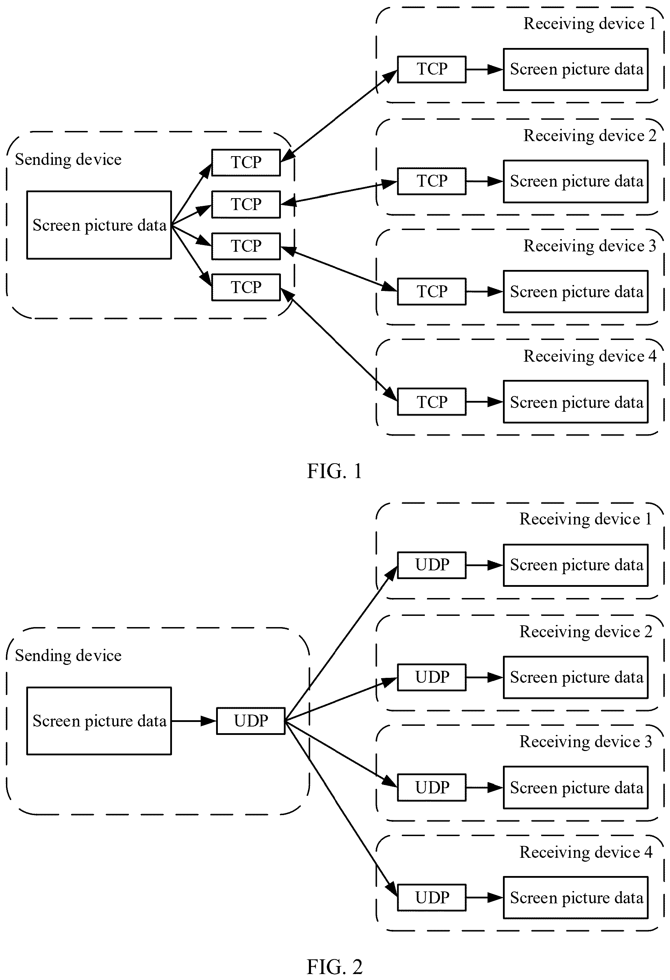

Refer to a unicast transmission framework shown in FIG. 1. An example in which a reliable transmission protocol is TCP and a quantity of a plurality of receiving devices is 4 is used. When the reliable transmission protocol is used to perform unicast projection one by one, a sending device establishes a transmission channel with each of a plurality of receiving devices, and the sending device sends screen picture data of the sending device to the receiving devices one by one through the transmission channels, to implement a one-to-many projection effect. In this case, the transmission channels separately established with the plurality of receiving devices by using the reliable transmission protocol are unicast channels. However, as a quantity of receiving devices increases, the sending device needs to repeatedly send more screen picture data to each receiving device, and overheads of resources such as a central processing unit (central processing unit, CPU), a random access memory (random access memory, RAM), and bandwidth of the sending device increase linearly. Especially in a scenario in which the sending device is a portable data transmission device, the portable data transmission device cannot meet overheads caused by repeatedly sending data a plurality of times. Therefore, the unicast framework shown in FIG. 1 cannot be used in the scenario in which the sending device is the portable data transmission device.

Refer to a multicast framework shown in FIG. 2. An example in which an unreliable transmission protocol is UDP and a quantity of a plurality of receiving devices is 4 is used. When the unreliable transmission protocol is used to perform multicast projection, a sending device and a plurality of receiving devices all join a same multicast group, that is, the sending device establishes one multicast channel with the plurality of receiving devices. The sending device needs to send screen picture data only once through the multicast channel, and the plurality of receiving devices can receive the screen picture data, to implement a one-to-many projection effect. The multicast framework shown in FIG. 2 can avoid a problem of resource overheads increase caused by an increase in a quantity of receiving devices. However, because multicast transmission of data is based on the unreliable transmission protocol, reliable transmission cannot be implemented, and a driver layer of multicast transmission cannot retransmit lost data like that of unicast transmission. Consequently, multicast transmission has a specific packet loss rate, and cannot support a requirement for high-quality data transmission in actual application.

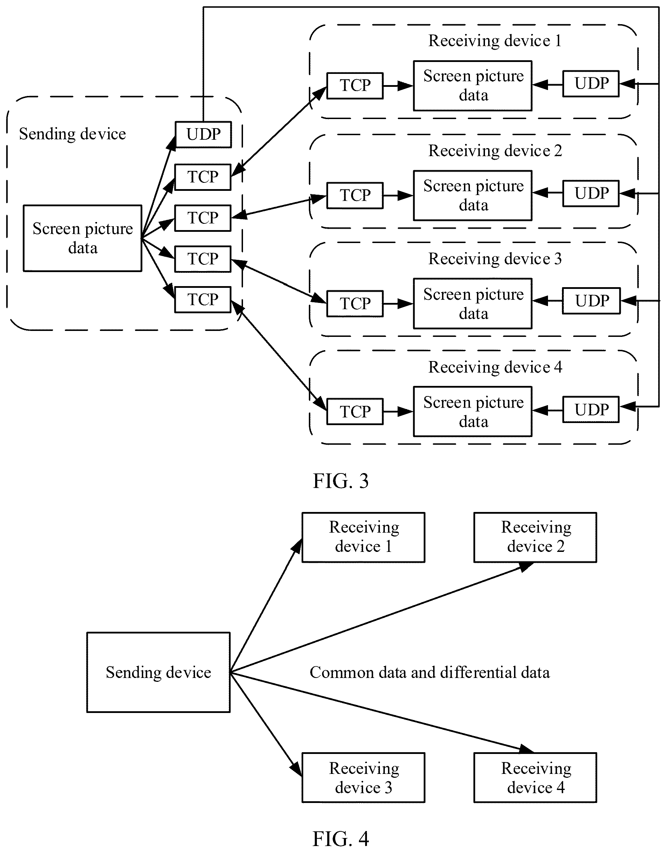

Refer to a reliable multicast framework shown in FIG. 3. An example in which a reliable transmission protocol is TCP, an unreliable transmission protocol is UDP, and a quantity of a plurality of receiving devices is 4 is used. When a combination of a reliable transmission protocol and an unreliable transmission protocol are used to perform reliable multicast projection, a sending device and a plurality of receiving devices join a multicast group, and screen picture data is transmitted through a UDP multicast channel. Because multicast transmission is used, transmitted screen picture data has a specific packet loss rate. Therefore, a reliable TCP unicast channel is established between the sending device and each of the plurality of receiving devices, and a packet loss request packet, a packet loss retransmission packet, and the like corresponding to the screen picture data are transmitted through the unicast channel, to compensate for a packet loss problem of multicast transmission. This resolves a problem of high resource overheads and meets a requirement for high-quality data transmission. Optionally, a unicast channel used in multicast transmission may be referred to as a "unicast member of multicast".

In embodiments of this application, same data that needs to be received by the plurality of receiving devices is referred to as common data. In FIG. 1 to FIG. 3, the screen picture data transmitted by the sending device to the plurality of receiving devices is the same. Therefore, the screen picture data transmitted in FIG. 1 to FIG. 3 includes only common data. However, with increasingly diversified requirements in the one-to-many data transmission scenario, on a basis of one-to-many transmission of common data, there is a requirement for one-to-many transmission of differential data. The differential data is different data that needs to be received by the plurality of receiving devices. The common data and the differential data in the one-to-many transmission may belong to a same service, or may belong to different services. This is not limited in embodiments of this application.

For example, screens of different receiving devices may have different parameters such as resolution and a length-width ratio. Therefore, the different receiving devices need to receive different picture adaptation data, so as to better adapt to screens of different sizes. For another example, users of different receiving devices may perform personalized control on screens, for example, adjust video progress and playing volume, select a song, adjust a playlist, or switch a song, so that the different receiving devices need to send different control data to the sending device, and the different receiving devices also need to receive different control response data, so as to meet personalized requirements of the users. For another example, different receiving devices play different subtitles for a video, so that the different receiving devices need to receive different subtitle data. The picture adaptation data, the control response data, and the subtitle data may all be the differential data in embodiments of this application. In this case, the screen picture data further includes the differential data in addition to the common data.

In conclusion, for the one-to-many transmission scenario of the common data and the differential data, how to transmit the common data and the differential data is an urgent problem to be resolved. Optionally, based on the reliable multicast framework shown in FIG. 3, the sending device may establish a plurality of additional unicast channels with the plurality of receiving devices, so that the sending device sends the differential data to the plurality of receiving devices one by one through the plurality of additional unicast channels. In this case, two unicast channels are established between the sending device and any receiving device. One unicast channel is used to transmit a packet loss retransmission packet, and the other unicast channel is used to transmit the differential data. Although the differential data can be transmitted, the plurality of additional unicast channels consumes additional resources such as a CPU and a RAM.

An embodiment of this application provides a data transmission method. In a reliable multicast framework that uses a combination of a reliable transmission protocol and an unreliable transmission protocol, differential data can be transmitted through a unicast channel for transmitting a packet loss retransmission packet in the reliable multicast framework, and there is no need to establish an additional unicast channel for transmitting the differential data. This not only implements transmission of common data and differential data, but also reduces overheads caused by transmitting the differential data, thereby improving data transmission efficiency.

An application scenario of the data transmission method is not limited in embodiments of this application, and the data transmission method may be applied to any scenario in which one-to-many transmission of common data and differential data needs to be performed. Optionally, the data transmission method provided in this embodiment of this application may be applied to a one-to-many wireless projection scenario in a local area network. For example, the one-to-many wireless projection scenario in the local area network includes but is not limited to a multi-screen video viewing scenario, a multi-screen Karaoke scenario, a multi-screen online conference, a multi-screen online education, multi-screen video surveillance, and the like in an intelligent cockpit.

FIG. 4 is a diagram of an implementation environment of a data transmission method according to an embodiment of this application. As shown in FIG. 4, the implementation environment includes one sending device and a plurality of receiving devices. A quantity of the plurality of receiving devices is not limited in embodiments of this application. In FIG. 4, four receiving devices are used as an example for description. One sending device transmits common data and differential data to a plurality of receiving devices. In other words, the plurality of receiving devices need to receive the same common data from the sending device, and also need to receive different differential data from the sending device.

In a possible implementation, the sending device or the receiving device may be any electronic product that can perform human-machine interaction with a user through one or more of a keyboard, a touchpad, a touchscreen, a remote control, a voice interaction device, or a handwriting device, for example, a personal computer (personal computer, PC), a smartphone, a personal digital assistant (personal digital assistant, PDA), a wearable device, a palmtop computer PPC (pocket PC, PPC), a tablet computer (portable android device, PAD), a large screen, or a central display screen.

A one-to-many wireless projection scenario is used as an example. The sending device and the receiving devices each include a corresponding screen. The sending device is an initiator of a one-to-many service, and is also a device that displays and sends screen picture data. Each receiving device is a receiver of the one-to-many service, and is also a device that receives and displays the screen picture data. The screen picture data includes the common data and the differential data. Optionally, the sending device and each receiving device access a same local area network. The sending device transmits the common data and the differential data to each receiving device through a channel in the local area network, and the common data and the differential data are displayed on a screen of each receiving device. A manner in which the sending device and each receiving device access a same local area network is not limited in embodiments of this application. For example, the sending device may access a same local area network with each receiving device by starting a soft hotspot (software access point, soft AP) or by using a wireless router.

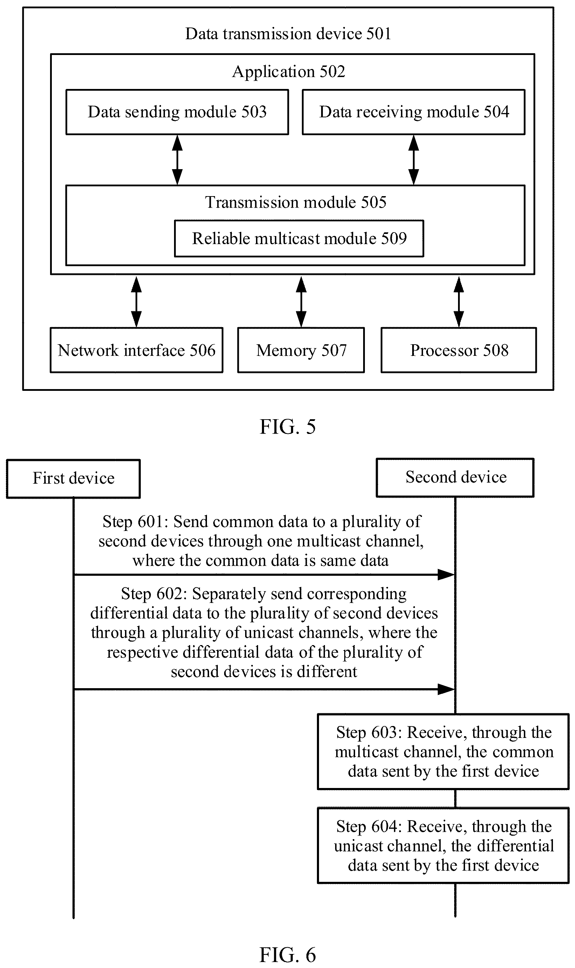

FIG. 5 is a diagram of a structure of a data transmission device according to an embodiment of this application. The data transmission device 501 shown in FIG. 5 may be the sending device or any receiving device in the implementation environment shown in FIG. 4. As shown in FIG. 5, program code of the data transmission method provided in this embodiment of this application exists in a reliable multicast module 509, the reliable multicast module 509 is included in a transmission module 505 of an application 502, and the application 502 is deployed on hardware of the data transmission device 501. When the data transmission method provided in this embodiment of this application is performed, the program code of the data transmission method provided in this embodiment of this application is loaded by a processor 508 and runs in a memory 507.

In a case of sending common data and differential data, the application 502 invokes, by using a data sending module 503, the transmission module 505, the reliable multicast module 509, and a network interface 506 in sequence to send the common data and the differential data. In a case of receiving the common data and the differential data, the common data and the differential data are received through the network interface 506, and then the common data and the differential data are delivered to the reliable multicast module 509. The reliable multicast module 509 delivers the common data and the differential data to a data receiving module 504. For the logic of receiving and sending the common data and the differential data by the reliable multicast module 509, refer to the related descriptions of the data transmission method shown in FIG. 6. Details are not described herein again.

Refer to FIG. 6. A data transmission method provided in an embodiment of this application is described by using an example in which a first device interacts with a plurality of second devices to perform the method. A process of interaction between the first device and any one of the plurality of second devices is the same. Therefore, in FIG. 6, only an example in which the first device interacts with one second device is used for illustration. The data transmission method shown in FIG. 6 may be applied to the implementation environment shown in FIG. 4. For example, the first device corresponds to the sending device shown in FIG. 4, and the second device corresponds to any one of the plurality of receiving devices shown in FIG. 4. A diagram of a structure of the first device and the second device may be shown in FIG. 5. As shown in FIG. 6, the data transmission method includes but is not limited to the following step 601 to step 604.

Step 601: The first device sends common data to the plurality of second devices through one multicast channel, where the common data is same data.

In this embodiment of this application, that the common data is same data may mean that the common data is same data that is sent by the first device and that needs to be received by the plurality of second devices. Because the common data received by different second devices is the same, the first device may access a same local area network with the plurality of second devices, and then send the common data to the plurality of second devices at a time through the one multicast channel. For example, the first device may join a same multicast group with the plurality of second devices, and the first device sends the common data based on the multicast group. In this case, all second devices belonging to the multicast group can receive the common data. The same common data does not need to be copied and sent a plurality of times. This simplifies a transmission manner of the common data, improves transmission efficiency of the common data, and reduces consumption of resources such as a CPU and a RAM caused by transmitting the common data.

In a possible implementation, the first device stores indication information corresponding to each of the plurality of second devices, the indication information indicates a storage position of common data that has been sent but has not been acknowledged, and the indication information corresponds to an identifier of the common data that has been sent but has not been acknowledged. Optionally, the first device may create a corresponding multicast unacknowledged storage unit for each second device. For example, after sending the common data to the plurality of second devices through the one multicast channel, the first device stores, in a plurality of multicast unacknowledged storage units respectively corresponding to the plurality of second devices, the common data that has been sent but has not been acknowledged. That is, the first device includes the plurality of multicast unacknowledged storage units respectively corresponding to the plurality of second devices.

Because the common data sent by the first device to the plurality of second devices is the same, if the common data that has been sent but has not been acknowledged is directly stored in the multicast unacknowledged storage units corresponding to the second devices, the common data that has been sent but has not been acknowledged is copied and stored a plurality of times, causing high resource overheads. A form of the multicast unacknowledged storage unit is not limited in embodiments of this application. For example, the multicast unacknowledged storage unit may be in a form of a list, a queue, a linked list, or the like. Similarly, a unicast unacknowledged storage unit, a multicast receiving storage unit, a unicast receiving storage unit, and the like in embodiments of this application may all be in a form of a list, a queue, a linked list, or the like.

In this embodiment of this application, the common data that has been sent but has not been acknowledged may not be directly stored in the plurality of multicast unacknowledged storage units respectively corresponding to the plurality of second devices, but the indication information is stored in the plurality of multicast unacknowledged storage units respectively corresponding to the plurality of second devices. For example, the multicast unacknowledged storage unit corresponding to any second device is configured to store the indication information. For example, the indication information may be a pointer of the storage position or a reference of the storage position. This is not limited in embodiments of this application. Therefore, the multicast unacknowledged storage unit may find, based on the stored indication information, the storage position of the common data that has been sent but has not been acknowledged, in other words, the common data that has been sent but has not been acknowledged needs to be stored at the storage position only once. This effectively reduces occupation of storage space.

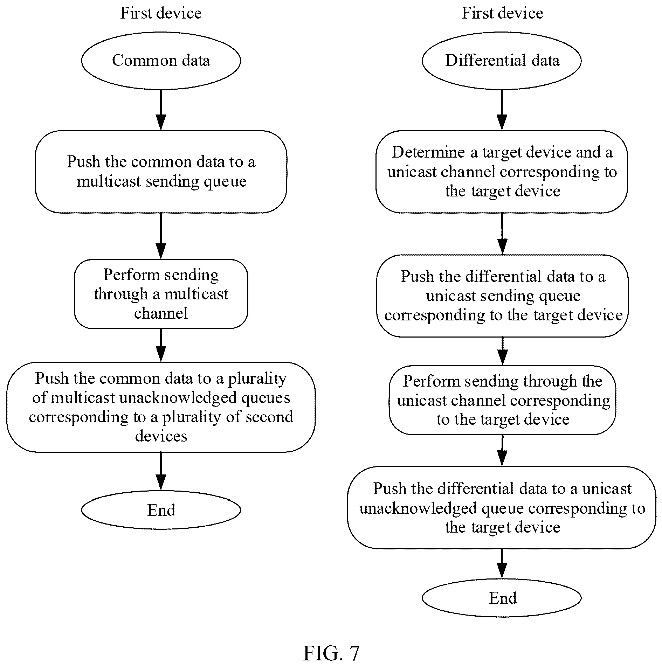

For example, refer to a flowchart of sending common data by the first device shown in FIG. 7. The first device pushes the common data to a multicast sending queue to wait for sending. The first device sends the common data in the multicast sending queue through the multicast channel, and then pushes, to a plurality of multicast unacknowledged queues respectively corresponding to the plurality of second devices, the common data that has been sent but has not been acknowledged.

Step 602: The first device separately sends corresponding differential data to the plurality of second devices through a plurality of unicast channels, where the respective differential data of the plurality of second devices is different.

In this embodiment of this application, that the respective differential data of the plurality of second devices is different may mean that the respective differential data of the plurality of second devices is completely different; or may mean that the respective differential data of the plurality of second devices is partially different, and different parts of the differential data of the plurality of second devices are also different. For example, the differential data is different data that is sent by the first device and that needs to be received by the plurality of second devices. The common data and the differential data that are sent by the first device to the plurality of second devices may belong to a same service, or may belong to different services. One unicast channel corresponds to one second device. In other words, a quantity of the plurality of unicast channels is the same as a quantity of the plurality of second devices. For example, the plurality of second devices include a third device, a fourth device, a fifth device, a sixth device, and a seventh device. In this case, the first device sends, to the third device through a first unicast channel corresponding to the third device, differential data corresponding to the third device; the first device sends, to the fourth device through a second unicast channel corresponding to the fourth device, differential data corresponding to the fourth device; and so on. Details are not described again. Therefore, differential data corresponding to any second device is sent to the any second device through a unicast channel corresponding to the any second device, so that accurate transmission of the differential data can be ensured.

Optionally, an execution sequence in which the first device sends the common data to the plurality of second devices through the one multicast channel and the first device separately sends the corresponding differential data to the plurality of second devices through the plurality of unicast channels is not limited. Optionally, the first device may simultaneously send the common data to the plurality of second devices through the one multicast channel, and send the corresponding differential data to the plurality of second devices through the plurality of unicast channels; or the first device first sends the common data to the plurality of second devices through the one multicast channel, and then sends the corresponding differential data to the plurality of second devices through the plurality of unicast channels.

In a possible implementation, the first device further stores differential data that has been sent but has not been acknowledged and that corresponds to each of the plurality of second devices. Optionally, the first device may create a corresponding unicast unacknowledged storage unit for each second device. For example, after separately sending the corresponding differential data to the plurality of second devices through the plurality of unicast channels, the first device stores, in a unicast unacknowledged storage unit corresponding to the third device, differential data that is sent to the third device but has not been acknowledged, stores, in a unicast unacknowledged storage unit corresponding to the fourth device, differential data that is sent to the fourth device but has not been acknowledged, and so on. That is, the first device includes a plurality of unicast unacknowledged storage units respectively corresponding to the plurality of second devices, and the unicast unacknowledged storage unit corresponding to any second device is used by the any second device to store differential data that has been sent but has not been acknowledged.

For example, refer to a flowchart of sending differential data by the first device shown in FIG. 7. For example, the first device sends differential data to a target device. The target device is any one of the plurality of second devices. The first device determines, based on the differential data, the target device corresponding to the differential data and a unicast channel corresponding to the target device, and pushes the differential data to a unicast sending queue corresponding to the target device to wait for sending. The first device sends, through the unicast channel corresponding to the target device, the differential data in the unicast sending queue corresponding to the target device, and then pushes, to a unicast unacknowledged queue corresponding to the second device, the differential data that has been sent but has not been acknowledged.

In a possible implementation, in addition to separately sending the corresponding differential data to the plurality of second devices through the plurality of unicast channels, the first device separately sends corresponding retransmission data to the plurality of second devices through the plurality of unicast channels. The retransmission data is at least one of common data or differential data that needs to be retransmitted by different second devices. Because a packet loss may occur in the common data transmitted through the multicast channel, the common data in which the packet loss occurs needs to be retransmitted. In addition, common data that needs to be retransmitted by different second devices may be different. Therefore, corresponding retransmission data needs to be transmitted through a corresponding unicast channel. In this embodiment of this application, the retransmission data is transmitted through the plurality of unicast channels for transmitting the differential data, and there is no need to additionally establish an independent unicast channel for transmitting the retransmission data. This ensures transmission quality of the common data, and can further avoid resource overheads for establishing the additional unicast channel, thereby improving data transmission efficiency.

In this embodiment of this application, a packet in which the differential data is located carries a first differential identifier, and the first differential identifier is used by the plurality of second devices to identify the differential data received through the unicast channels; and a packet in which the common data is located carries a first common identifier, and the first common identifier is used by the plurality of second devices to identify the common data received through the unicast channels. For example, the first device may add the first differential identifier to the packet in which the differential data sent through the plurality of unicast channels is located, and add the first common identifier to the packet in which the common data sent through the plurality of unicast channels is located. This is equivalent to that the first device adds the first common identifier to the common data and adds the first differential identifier to the differential data. When the retransmission data transmitted through the unicast channel includes retransmitted common data, the first device transmits both the differential data and the retransmitted common data through the unicast channel. Therefore, the first differential identifier is carried in the packet in which the differential data is located, and the first common identifier is carried in the packet in which the common data is located, so that the second device on a receiving side identifies whether data corresponding to a packet received through the unicast channel is the common data or the differential data. This improves accuracy of data transmission.

Optionally, the first device may determine an identifier of a lost packet based on received feedback information for at least one of the common data or the differential data, and then obtain, as the retransmission data from the stored unacknowledged storage unit, the lost packet corresponding to the identifier. For example, the feedback information may indicate a received acknowledgment packet, for example, an acknowledge (acknowledge, ACK) packet; or the feedback information may indicate a packet loss request packet that needs to be retransmitted, for example, a negative acknowledge (negative acknowledge, NACK) packet.

A manner of obtaining the common data that needs to be retransmitted in the retransmission data may be as follows: The first device receives a packet loss request packet through the first unicast channel that corresponds to the third device and that is in the plurality of unicast channels, where the third device is any one of the plurality of second devices; when the packet loss request packet includes a second common identifier and a first identifier of the common data that needs to be retransmitted, obtains, based on the common data indicated by the second common identifier, first indication information corresponding to the first identifier from indication information corresponding to the third device, and uses, as retransmission data corresponding to the first unicast channel, common data stored at a storage position indicated by the first indication information; and when the packet loss request packet includes a second differential identifier and a second identifier of the differential data that needs to be retransmitted, obtains, based on the differential data indicated by the second differential identifier, the differential data corresponding to the second identifier from differential data that has been sent but has not been acknowledged and that corresponds to the third device, and uses, as the retransmission data corresponding to the first unicast channel, the differential data corresponding to the second identifier. For example, the first indication information corresponding to the first identifier is obtained from a multicast unacknowledged storage unit corresponding to the third device, and the differential data corresponding to the second identifier is obtained from a unicast unacknowledged storage unit corresponding to the third device.

The third device is any one of the plurality of second devices. The second common identifier indicates that the packet loss request packet is a packet loss request packet corresponding to the common data. The second common identifier may be the same as or different from the first common identifier. The second differential identifier indicates that the packet loss request packet is a packet loss request packet corresponding to the differential data. The second differential identifier may be the same as or different from the first differential identifier. Therefore, common data that needs to be retransmitted in retransmission data corresponding to different unicast channels can be obtained by using the stored multicast unacknowledged storage unit and the received packet loss request packet, and differential data that needs to be retransmitted in retransmission data corresponding to different unicast channels can be obtained by using the stored unicast unacknowledged storage unit and the received packet loss request packet. This ensures accuracy of obtaining the retransmission data. Accurate transmission of the retransmission data resolves a packet loss problem of data transmission, thereby improving transmission quality of data transmission.

It can be learned from the foregoing descriptions of the feedback information that the first device may further receive an acknowledgment packet returned through the unicast channel. Optionally, a manner of processing the acknowledgment packet for the common data may be as follows: The first device receives the acknowledgment packet through the second unicast channel that corresponds to the fourth device and that is in the plurality of unicast channels; when the acknowledgment packet includes a third common identifier and a third identifier of the received common data, deletes, based on the common data indicated by the third common identifier, second indication information corresponding to the third identifier from indication information corresponding to the fourth device; when the acknowledgment packet includes a third differential identifier and a fourth identifier of the received differential data, deletes, based on the differential data indicated by the third differential identifier, the differential data corresponding to the fourth identifier from differential data that has been sent but has not been acknowledged and that corresponds to the fourth device; and when a plurality of acknowledgment packets are respectively received through the plurality of unicast channels, and the plurality of acknowledgment packets each include the third identifier, deletes common data stored at a storage position indicated by the second indication information. For example, the second indication information corresponding to the third identifier is deleted from a multicast unacknowledged storage unit corresponding to the fourth device, and the differential data corresponding to the fourth identifier is deleted from a unicast unacknowledged storage unit corresponding to the fourth device.

The fourth device is any one of the plurality of second devices, and the fourth device may be the same as or different from the third device. Therefore, indication information stored in a multicast unacknowledged storage unit is deleted in time based on the received acknowledgment packet, and the stored common data is deleted in time based on the received plurality of acknowledgment packets, so that storage space of the first device can be saved.

Step 603: The second device receives, through the multicast channel, the common data sent by the first device.

In this embodiment of this application, the second device is any one of the plurality of second devices. Because receiving and sending logic of the plurality of second devices is the same, receiving and sending logic of another second device in the plurality of second devices is not described in this embodiment of this application. Optionally, the second device stores the common data received through the multicast channel. For example, the second device may create a multicast receiving storage unit, and the multicast receiving storage unit is configured to store the received common data. For example, after receiving, through the multicast channel, the common data sent by the first device, the second device stores the common data in the multicast receiving storage unit.

In a possible implementation, when it is determined that the common data corresponding to the first identifier is retransmitted, a packet loss request packet including the second common identifier and the first identifier of the common data that needs to be retransmitted may be returned to the first device through the unicast channel; and when it is determined that the common data corresponding to the third identifier is received, an acknowledgment packet including the third common identifier and the third identifier of the received common data may be returned to the first device through the unicast channel. Optionally, whether the common data corresponding to the first identifier needs to be retransmitted or whether the common data corresponding to the third identifier is received may be determined based on the multicast receiving storage unit. For example, if the multicast receiving storage unit does not store the common data corresponding to the first identifier, it is determined that the common data corresponding to the first identifier needs to be retransmitted; and if the unicast receiving storage unit already stores the common data corresponding to the third identifier, it is determined that the common data corresponding to the third identifier is received. By using feedback of the packet loss request packet including the second common identifier and the acknowledgment packet including the second common identifier, the first device can determine a receiving status of the common data, so that lost packet retransmission of the common data can be implemented, and transmission quality of the common data is improved.

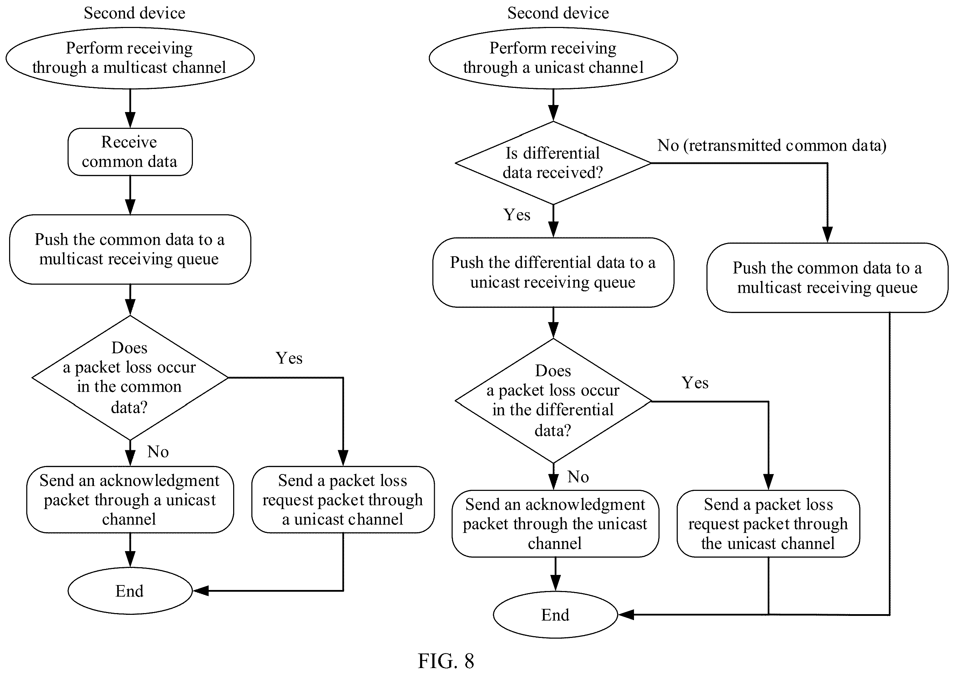

For example, refer to a flowchart of receiving common data by the second device through a multicast channel shown in FIG. 8. The second device receives data through the multicast channel. When the received data is common data, the second device pushes the common data to a multicast receiving queue, and waits for reading by an application of the second device. The second device determines whether a packet loss occurs in the common data; and if the packet loss occurs in the common data, feeds back a corresponding packet loss request packet to the first device through the unicast channel; or if no packet loss occurs in the common data, feeds back a corresponding acknowledgment packet to the first device through the unicast channel.

Step 604: The second device receives, through the unicast channel, the differential data sent by the first device.

In this embodiment of this application, the first device separately establishes corresponding unicast channels with the plurality of second devices. Therefore, the unicast channel used by the second device to receive the differential data in step 604 is the unicast channel corresponding to the second device. Optionally, the second device stores the differential data received through the unicast channel. For example, the second device may create a unicast receiving storage unit, and the unicast receiving storage unit is configured to store the received differential data. For example, after receiving, through the unicast channel, the differential data sent by the first device, the second device stores the received differential data in the unicast receiving storage unit.

When the second device receives, through the unicast channel, the differential data sent by the first device, and further receives, through the unicast channel, the retransmission data sent by the first device, the retransmission data may include the common data that needs to be retransmitted. Therefore, the second device needs to perform unicast sorting on the data received through the unicast channel, to push the common data received through the unicast channel to the multicast receiving storage unit, and push the differential data received through the unicast channel to the unicast receiving storage unit. The retransmission data is received through the unicast channel for receiving the differential data, so that the retransmission data and the retransmission data can be transmitted through the same unicast channel, and there is no need to additionally establish an independent unicast channel for transmitting the retransmission data. This ensures transmission quality of the common data through retransmission, can further avoid resource overheads caused by establishing the additional unicast channel, and improves data transmission efficiency.

In a possible implementation, the packet in which the common data received through the unicast channel is located carries the first common identifier, and the packet in which the differential data received through the unicast channel is located carries the first differential identifier. The second device identifies, based on the first common identifier and the first differential identifier, the packet received through the unicast channel, and separately stores the common data and the differential data that are obtained through identification. For example, the second device may identify, based on the first common identifier and the first differential identifier, the packet received through the unicast channel, store data in the packet identified as the first common identifier as common data in the multicast receiving storage unit, and store data in the packet identified as the first differential identifier as differential data in the unicast receiving storage unit. By using the first common identifier and the first differential identifier, the second device can accurately identify whether the common data or the differential data is received through the unicast channel, so that accuracy of receiving data is improved.

Similar to the feedback information for the common data, when it is determined that the differential data corresponding to the second identifier is retransmitted, a packet loss request packet including the second differential identifier and the second identifier of the differential data that needs to be retransmitted may be returned to the first device through the unicast channel; and when it is determined that the differential data corresponding to the fourth identifier is received, an acknowledgment packet including the third differential identifier and the fourth identifier of the received differential data may be returned to the first device through the unicast channel. Optionally, whether the differential data corresponding to the second identifier needs to be retransmitted or whether the differential data corresponding to the fourth identifier is received may be determined based on the unicast receiving storage unit. For example, if the differential data corresponding to the second identifier is not stored in the unicast receiving storage unit, it is determined that the differential data corresponding to the second identifier needs to be retransmitted; or if the differential data corresponding to the fourth identifier has been stored in the unicast receiving storage unit, it is determined that the differential data corresponding to the fourth identifier is received. By using feedback of the packet loss request packet including the second differential identifier and the acknowledgment packet including the third differential identifier, the first device can determine a receiving status of the differential data, so that lost packet retransmission of the differential data can be implemented, and transmission quality of the differential data is improved.

For example, refer to a flowchart of receiving unicast data by the second device through a unicast channel shown in FIG. 8. The unicast data includes differential data and retransmission data. The second device receives the unicast data through the unicast channel, and determines whether the unicast data received through the unicast channel is differential data. When the received unicast data is the differential data, the second device pushes the differential data to the unicast receiving queue, and waits for reading by the application of the second device. Further, the second device determines whether a packet loss occurs in the differential data; and if the packet loss occurs in the differential data, feeds back a corresponding packet loss request packet to the first device through the unicast channel; or if no packet loss occurs in the differential data, feeds back a corresponding acknowledgment packet to the first device through the unicast channel. When the received unicast data is not the differential data, it indicates that the received unicast data is the retransmitted common data in the retransmission data. In this case, the second device pushes the retransmitted common data to the multicast receiving queue, and waits for reading by the application of the second device.

In conclusion, the first device sends the common data, the differential data, and the retransmission data to the plurality of second devices by using step 601 to step 604. In the one-to-many data transmission scenario, the first device sends the differential data to the plurality of second devices. In addition, any second device may further send differential data to the first device. In other words, the first device needs to exchange different differential data with the plurality of second devices. Optionally, the differential data sent by the first device to the plurality of second devices is referred to as first differential data, and the differential data sent by the any second device to the first device is referred to as second differential data. In this case, the second differential data is different data sent by different second devices to the first device.

When the second device sends the second differential data to the first device, the second device may send the second differential data to the first device through the unicast channel for receiving the first differential data. Optionally, the second device creates a unicast unacknowledged storage unit, and the unicast unacknowledged storage unit is configured to store second differential data that has been sent but has not been acknowledged. For example, after sending the second differential data to the first device through the unicast channel, the second device may store the second differential data that has been sent but has not been acknowledged, for example, store the second differential data in the unicast unacknowledged storage unit. Logic of sending the second differential data by the second device is similar to logic of sending the first differential data by the first device. Details are not described herein again.

In a possible implementation, the first device receives, through a third unicast channel that corresponds to the fifth device and that is in the plurality of unicast channels, second differential data sent by the fifth device, where the fifth device is any one of the plurality of second devices. Logic of receiving the second differential data by the first device is similar to logic of receiving the first differential data by the second device. Details are not described herein again. In this way, the first device and the plurality of second devices may transmit the differential data to each other. This improves transmission flexibility of the differential data, and meets more diversified one-to-many data transmission scenarios. In addition, the unicast channel used by the first device to transmit the first differential data and the retransmission data to the second device may be further used by the second device to transmit the second differential data to the first device. This further improves utilization of the unicast channel and reduces resource overheads caused by data transmission.

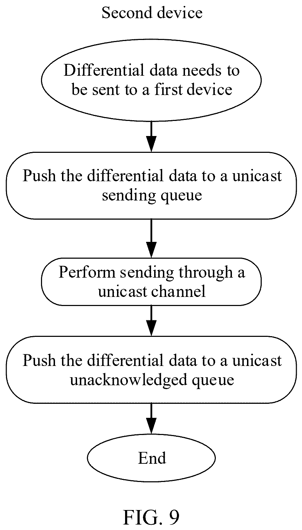

For example, refer to a flowchart of sending differential data by the second device to the first device shown in FIG. 9. The differential data in FIG. 9 corresponds to the second differential data in this embodiment of this application. As shown in FIG. 9, when the second device sends the differential data to the first device, the second device pushes the differential data to the unicast sending queue to wait for sending. The second device sends the differential data in the unicast sending queue through the unicast channel, then pushes differential data that is sent but has not been acknowledged to the unicast unacknowledged queue, until an acknowledgment packet corresponding to the differential data is received, and deletes the differential data stored in the unicast unacknowledged queue. In this way, the second device can send the second differential data to the first device through the unicast channel.

Optionally, after receiving, through the third unicast channel that corresponds to the fifth device and that is in the plurality of unicast channels, the second differential data sent by the fifth device, the first device may store the second differential data in a unicast receiving storage unit corresponding to the fifth device. When it is determined, based on the unicast receiving storage unit corresponding to the fifth device, that the second differential data corresponding to a fifth identifier needs to be retransmitted, a packet loss request packet including a fourth differential identifier and the fifth identifier of the second differential data that needs to be retransmitted is sent to the fifth device through the third unicast channel; and when it is determined, based on the unicast receiving storage unit corresponding to the fifth device, that second differential data corresponding to a sixth identifier is received, an acknowledgment packet including a fifth differential identifier and the sixth identifier of the received second differential data is sent to the fifth device through the third unicast channel. By using feedback of the packet loss request packet and the acknowledgment packet, the fifth device can determine a receiving status of the second differential data, so that lost packet retransmission of the second differential data can be implemented, and transmission quality of the second differential data is improved.

Similarly, if the second device receives, through the unicast channel, the packet loss request packet that is returned by the first device and that includes the fourth differential identifier and the fifth identifier of the second differential data that needs to be retransmitted, the second differential data corresponding to the fifth identifier is obtained from the unicast unacknowledged storage unit, and the second differential data corresponding to the fifth identifier is used as the retransmission data and sent to the first device through the unicast channel. If the acknowledgment packet that is returned by the first device and that includes the fifth differential identifier and the sixth identifier of the received second differential data is received through the unicast channel, the second differential data corresponding to the sixth identifier is deleted from the unicast unacknowledged storage unit. The second differential data that needs to be retransmitted can be obtained by using the unicast unacknowledged storage unit and the packet loss request packet. This ensures accuracy of obtaining the retransmission data. The second differential data stored in the unicast unacknowledged storage unit is deleted in time by using the acknowledgment packet, so that storage space of the second device can be saved.

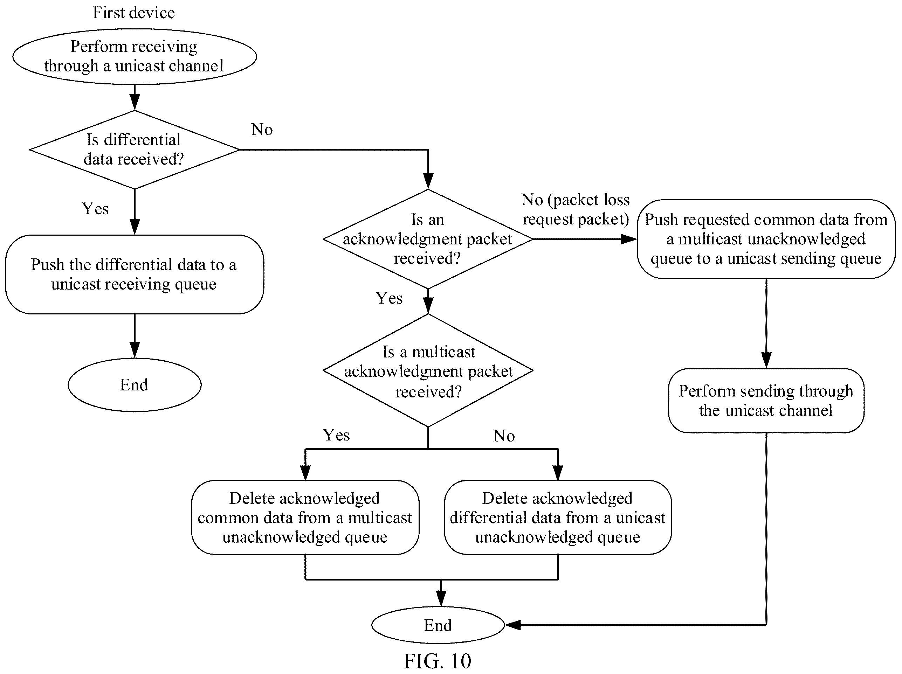

For example, refer to a flowchart of receiving data by the first device through a unicast channel shown in FIG. 10. The first device receives the data through the unicast channel, and determines whether the data received through the unicast channel is differential data. When the received data is the differential data, the first device pushes the differential data to the unicast receiving queue, and waits for reading by an application of the first device. When the received data is not the differential data, it is determined whether the received data is an acknowledgment packet. If the received data is an acknowledgment packet, it is further determined whether the acknowledgment packet is a multicast acknowledgment packet, where the multicast acknowledgment packet is an acknowledgment packet corresponding to the common data. When the acknowledgment packet is a multicast acknowledgment packet, acknowledged common data is deleted from the multicast unacknowledged queue. When the acknowledgment packet is not a multicast acknowledgment packet, it indicates that the acknowledgment packet is a unicast acknowledgment packet, where the unicast acknowledgment packet is an acknowledgment packet corresponding to the differential data. In this case, acknowledged differential data is deleted from the unicast unacknowledged queue. If the received data is not an acknowledgment packet, it indicates that the received data is a packet loss request packet. In this case, requested common data is pushed from the multicast unacknowledged queue to the unicast sending queue to wait for being sent, and the requested common data is the common data that needs to be retransmitted, so that the common data that needs to be retransmitted in the unicast sending queue is sent through the unicast channel.

According to the method provided in this embodiment of this application, one-to-many transmission of common data is implemented through the one multicast channel, so that transmission efficiency of the common data is improved, and resource overheads for transmitting the common data are low. On this basis, in the method, one-to-many transmission of differential data is implemented through the plurality of unicast channels, so that both the common data and differential data can be transmitted in the one-to-many data transmission scenario, and data types for one-to-many data transmission are richer. In addition, different second devices can perform different personalized operations based on the differential data. Therefore, the method can better meet requirements of diversified one-to-many data transmission scenarios.

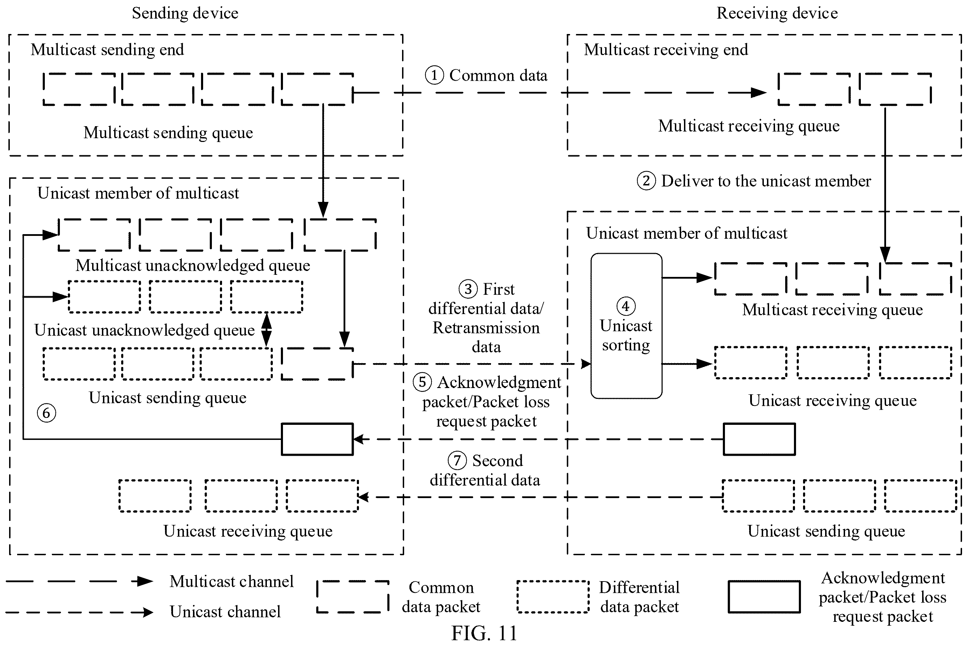

The following uses an example in which the first device is a sending device and the second device is a receiving device to describe the data transmission method provided in this embodiment of this application with reference to a schematic flowchart of a data transmission method shown in FIG. 11. In this embodiment of this application, there are a plurality of receiving devices, and the plurality of receiving devices have same receiving and sending logic for common data and differential data. Therefore, in this embodiment of this application, receiving and sending logic of one receiving device for the common data and the differential data is used as an example for description. First differential data shown in FIG. 11 represents differential data sent by the sending device to the receiving device, and second differential data represents differential data sent by the receiving device to the sending device. In other words, the sending device and the receiving device may transmit differential data to each other through a same unicast channel.

As shown in FIG. 11, the sending device includes a multicast sending end, and the receiving device includes a multicast receiving end. In this data transmission scenario, unicast and multicast are closely coupled. Therefore, unicast in multicast is referred to as a unicast member of multicast. In this embodiment of this application, the common data is common data including a plurality of common data packets, and the differential data is differential data including a plurality of differential data packets. Each grid in FIG. 11 represents one packet. Therefore, the common data shown in FIG. 11 includes four common data packets, and the first differential data and the second differential data shown in FIG. 11 each include three differential data packets.

In step ① shown in FIG. 11, the sending device sends common data in a multicast sending queue to the multicast receiving end through a multicast channel. In this embodiment of this application, the sending device sends the common data through the multicast channel, and the common data is received by a plurality of receiving devices. In FIG. 11, one receiving device is used as an example for description. When the sending device sends the common data through the multicast channel, the sending device pushes a common data packet that has been sent but has not been acknowledged to a multicast unacknowledged queue corresponding to the receiving device, and deletes the common data packet in the multicast unacknowledged queue after receiving an acknowledgment packet corresponding to the common data packet. When there are a plurality of receiving devices, the sending device also includes a plurality of unicast members of multicast, that is, one receiving device corresponds to one unicast member of multicast. In this case, the common data packet that has been sent but has not been acknowledged is pushed to each of a plurality of multicast unacknowledged queues respectively corresponding to the plurality of unicast members.

Optionally, a manner of pushing the common data packet that has been sent but has not been acknowledged to each of the plurality of multicast unacknowledged queues respectively corresponding to the plurality of unicast members may be: storing, in the plurality of multicast unacknowledged queues, indication information of a storage position of the common data packet that has been sent but has not been acknowledged. In other words, the plurality of multicast unacknowledged queues store the indication information instead of the data, and the common data packet that has been sent but has not been acknowledged only needs to be stored at the corresponding storage position. Therefore, the common data packet stored at the storage position is deleted only after the plurality of unicast members of multicast all acknowledge the common data packet. In this way, an increase in RAM overheads caused by copying the common data that has been sent but has not been acknowledged a plurality of times in the plurality of multicast unacknowledged queues can be avoided.

In step ② shown in FIG. 11, the receiving device delivers the common data packet received by the multicast receiving end to a multicast receiving queue of the unicast member of multicast. Optionally, after step ① shown in FIG. 11 is performed, the receiving device receives, through the multicast channel, a common data packet sent by the sending device. The common data packet is directly delivered to the unicast member of multicast, is stored in the multicast receiving queue of the unicast member, and waits for reading by an application of the sending device.

In step ③ shown in FIG. 11, the sending device sends the first differential data in a unicast sending queue through the unicast channel. When the application of the sending device starts reliable multicast transmission provided in this embodiment of this application, the common data is sent by using step ①, and the differential data is sent by using step ③. The two steps ① and ③ may be simultaneously performed. When there are a plurality of receiving devices, the sending device needs to determine which receiving device is a target receiving device of the first differential data, and select a unicast sending queue of a corresponding unicast member to send the corresponding first differential data. Similar to step ①, when the sending device sends the first differential data through the unicast channel, the sending device pushes a first common data packet that has been sent but has not been acknowledged to a unicast unacknowledged queue corresponding to the receiving device, and deletes a first differential data packet from the unicast unacknowledged queue after receiving an acknowledgment packet corresponding to the first differential data packet.

In a possible implementation, data transmission based on the multicast channel is unreliable transmission. Therefore, a packet loss may occur in common data transmitted through the multicast channel. Therefore, when a packet loss occurs in the common data, the sending device needs to retransmit the common data packet in which the packet loss occurs. Optionally, in step ③, in addition to the first differential data, the unicast sending queue of the sending device includes the common data packet that needs to be retransmitted, or includes the first differential data packet that needs to be retransmitted. Further, the sending device further sends retransmission data in the unicast sending queue through the unicast channel, where the retransmission data includes at least one of the common data packet or the first differential data packet that needs to be retransmitted and that corresponds to the receiving device.

In step ④ shown in FIG. 11, the receiving device performs unicast sorting on unicast data received through the unicast channel, pushes the common data packet in the unicast data to the multicast receiving queue, and pushes the first differential data packet in the unicast data to a unicast receiving queue. After step ③ is performed, the unicast data received by the receiving device through the unicast channel may include the first differential data or may include the common data. Therefore, the receiving device needs to distinguish the received unicast data through unicast sorting. Optionally, when sending the unicast data, the sending device separately marks different identifiers for the common data and the first differential data, so that the receiving device distinguishes the common data and the first differential data in the unicast data by using the identifiers. A manner of marking different identifiers for the common data and the first differential data is not limited in embodiments of this application, provided that the common data and the first differential data can be distinguished. For example, a first common identifier is added to the common data packet, and a first differential identifier is added to the first common data packet.

In step ⑤ shown in FIG. 11, when receiving the common data packet or the first differential data packet, the receiving device returns a corresponding acknowledgment packet to the sending device; and when detecting that a packet loss occurs in the common data packet or the first differential data packet, the receiving device returns a corresponding packet loss request packet to the sending device. For example, in receiving processes in step ② and step ④, if the common data packet is successfully received, an acknowledgment packet that includes a third common identifier and that corresponds to the common data packet is sent through the unicast channel; and if it is detected that a packet loss occurs in the common data packet, a packet loss request packet that includes a second common identifier and that corresponds to the common data packet is sent through the unicast channel. In addition, in the receiving process in step ④, if the first differential data packet is successfully received, an acknowledgment packet that includes a third differential identifier and that corresponds to the first differential data packet is also sent through the unicast channel; and if it is detected that a packet loss occurs in the first differential data packet, a packet loss request packet that includes a second differential identifier and that corresponds to the first differential data packet is also sent through the unicast channel.

In step ⑥ shown in FIG. 11, the sending device receives, through the unicast channel, the acknowledgment packet or the packet loss request packet returned by the receiving device. After the sending device receives the acknowledgment packet of the receiving device through the unicast channel, if the acknowledgment packet includes the third common identifier and indicates that the acknowledgment packet is the acknowledgment packet corresponding to the common data packet, the sending device deletes an acknowledged common data packet in the multicast unacknowledged queue; and if the acknowledgment packet includes the third differential identifier and indicates that the acknowledgment packet is the acknowledgment packet corresponding to the first differential data packet, the sending device deletes an acknowledged first differential data packet in the unicast unacknowledged queue. If the multicast unacknowledged queue stores the indication information of the storage position of the common data packet, indication information of a storage position of the acknowledged common data packet in the multicast unacknowledged queue is deleted. If the sending device receives acknowledgment packets corresponding to common data packets returned by all the receiving devices, the common data packet stored at the storage position is further deleted.

In this embodiment of this application, after the sending device receives the packet loss request packet of the receiving device through the unicast channel, if the packet loss request packet includes the second common identifier and indicates that the packet loss request packet is a packet loss request packet corresponding to the common data packet, the sending device finds, from the multicast unacknowledged queue, the common data packet that needs to be retransmitted, and pushes the common data packet to the unicast sending queue of the unicast member. If the packet loss request packet includes the second differential identifier and indicates that the packet loss request packet is a packet loss request packet corresponding to the first differential data packet, the sending device finds, from the unicast unacknowledged queue, the first differential data packet that needs to be retransmitted, and also pushes the first differential data packet to the sending queue of the unicast member.

In step ⑦ shown in FIG. 11, the receiving device sends the second differential data in the unicast sending queue through the unicast channel, and the sending device pushes, to the unicast receiving queue, the second differential data received through the unicast channel. Therefore, in a case in which the receiving device needs to send the second differential data to the sending device, in this embodiment of this application, the second differential data may be sent through a unicast channel of a unicast member of the receiving device, so that a unicast channel of one unicast member may be used to transmit the first differential data, the retransmission data, and the second differential data. This improves utilization of the unicast channel, and reduces resource overheads caused by data transmission. Similarly, the unicast member of the receiving device also includes a unicast unacknowledged queue, which is similar to the unicast unacknowledged queue of the sending device, and is not repeatedly shown in FIG. 11.

In conclusion, an application of the receiving device may finally obtain the common data and the differential data by reading the multicast receiving queue and the unicast receiving queue, to implement transmission of the common data and the differential data. In addition, the common data and the differential data are transmitted through the same unicast channel. Therefore, resource overheads caused by transmitting the common data and the differential data are low.

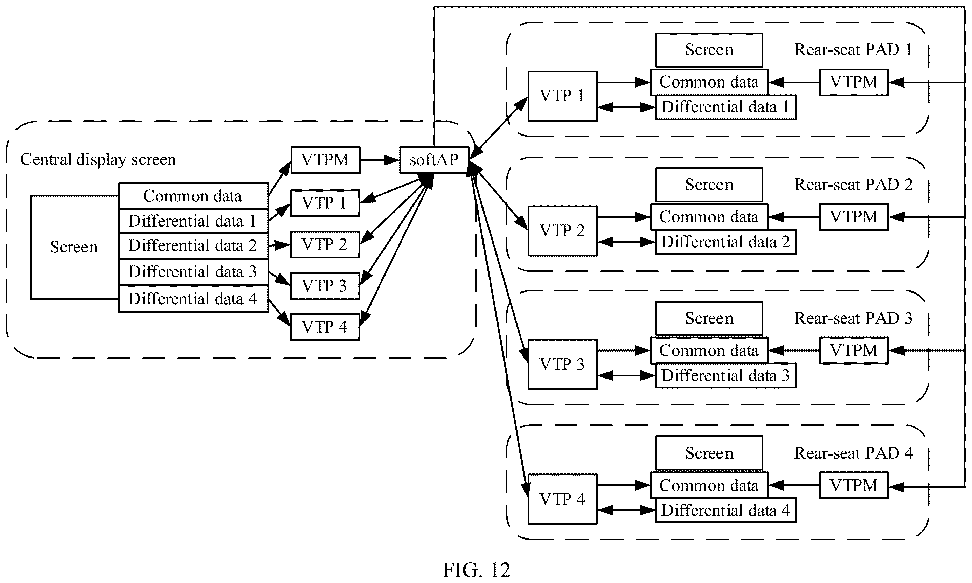

The following describes the data transmission method provided in this embodiment of this application by using an example in which a central display screen in an intelligent cockpit projects a screen to a plurality of rear-seat PADs. Refer to FIG. 12. The central display screen corresponds to the first device or the sending device in this embodiment of this application, and a quantity of the plurality of rear-seat PADs is 4, which corresponds to four second devices or receiving devices in this embodiment of this application, that is, a one-to-four projection scenario.

Optionally, a transmission protocol used between the central display screen and the plurality of rear-seat PADs is VTP, where VTPM is a port of a multicast channel, and VTPs 1 to 4 are ports of four unicast channels respectively. The central display screen accesses a same local area network with the plurality of rear-seat PADs by starting a softAP. During projection, a rear-seat passenger can control sound volume and video progress on the PAD, or select subtitles displayed on the PAD. If the four rear-seat PADs have different resolution and aspect ratios, the central display screen further needs to send different picture adaptation data to the four rear-seat PADs.

In the scenario shown in FIG. 12, common data is same picture data displayed on the rear-seat PADs, and differential data is control data of the rear-seat passenger for sound volume and video progress, different subtitle stream data, and different PAD picture adaptation data. The subtitle stream data and the picture adaptation data in the differential data correspond to the first differential data in this embodiment of this application, the subtitle stream data and the picture adaptation data are transmitted by the central display screen to each PAD, the control data corresponds to the second differential data in this embodiment of this application, and the control data is transmitted by each PAD to the central display screen. Different PADs receive or send different differential data. Therefore, the central display screen exchanges differential data 1 to differential data 4 with the rear-seat PADs 1 to 4 through the VTPs 1 to 4.

In this embodiment of this application, the common data and the differential data 1 to the differential data 4 may be simultaneously transmitted. For an implementation of transmitting the common data and the differential data between the central display screen and the plurality of rear-seat PADs, refer to the implementation of the data transmission method shown in FIG. 6 or FIG. 11. Details are not described herein again.

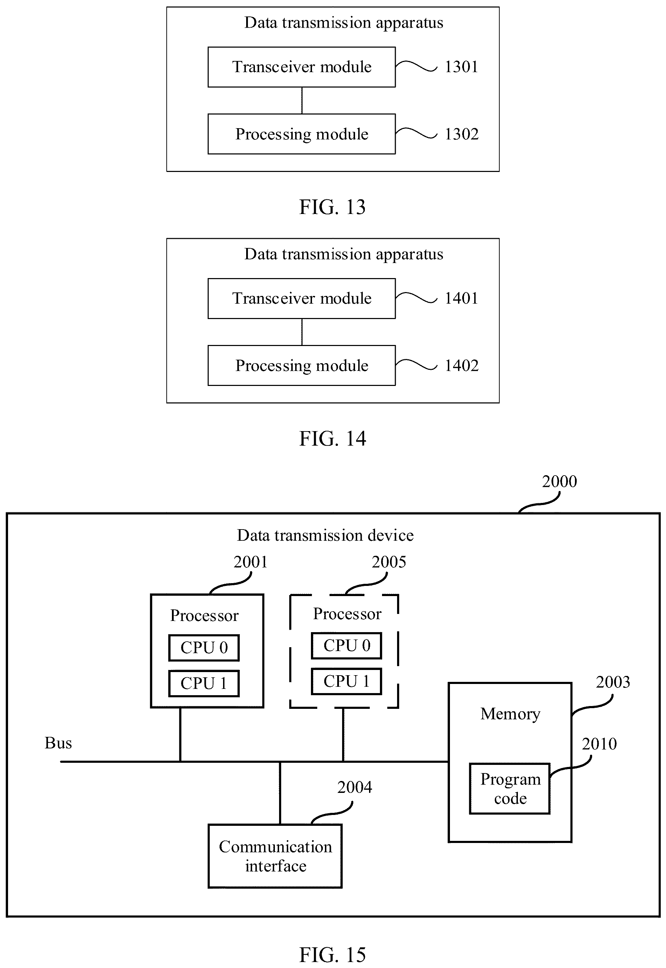

The foregoing describes the data transmission method in embodiments of this application. In correspondence with the foregoing method, an embodiment of this application further provides a data transmission apparatus. FIG. 13 is a diagram of a structure of a data transmission apparatus according to an embodiment of this application. The apparatus is used in a first device. The first device is the first device shown in FIG. 6, or the first device is the sending device shown in FIG. 11. Based on a plurality of modules shown in FIG. 13 below, the data transmission apparatus shown in FIG. 13 can perform all or a part of operations performed by the first device. It should be understood that the apparatus may include more additional modules than the shown modules or a part of the shown modules may be omitted. This is not limited in embodiments of this application. As shown in FIG. 13, the apparatus includes:
a transceiver module 1301, configured to perform a receiving-related operation and/or a sending-related operation performed by the first device in the data transmission method shown in FIG. 6, and a processing module 1302, configured to perform an operation other than the receiving-related operation and/or the sending-related operation performed by the first device in the data transmission method shown in FIG. 6; or a transceiver module 1301, configured to perform a receiving-related operation and/or a sending-related operation performed by the sending device in the data transmission method shown in FIG. 11, and a processing module 1302, configured to perform an operation other than the receiving-related operation and/or the sending-related operation performed by the sending device in the data transmission method shown in FIG. 11.

In a possible implementation, the transceiver module includes a receiving module and/or a sending module. The receiving module is configured to perform the receiving-related operation, and the sending module is configured to perform the sending-related operation.

In a possible implementation, the transceiver module 1301 is configured to: send common data to a plurality of second devices through one multicast channel, where the common data is same data; and separately send corresponding differential data to the plurality of second devices through a plurality of unicast channels, where respective differential data of the plurality of devices is different.

In a possible implementation, the transceiver module 1301 is further configured to separately send corresponding retransmission data to the plurality of second devices through the plurality of unicast channels. The retransmission data is at least one of common data or differential data that needs to be retransmitted by different second devices.

In a possible implementation, a packet in which the differential data is located carries a first differential identifier, and the first differential identifier is used by the plurality of second devices to identify the differential data received through the unicast channels; and a packet in which the common data is located carries a first common identifier, and the first common identifier is used by the plurality of second devices to identify the common data received through the unicast channels.

In a possible implementation, the first device stores indication information corresponding to each of the plurality of second devices and differential data that has been sent but has not been acknowledged, the indication information indicates a storage position of common data that has been sent but has not been acknowledged, and the indication information corresponds to an identifier of the common data that has been sent but has not been acknowledged. The transceiver module 1301 is further configured to: receive a packet loss request packet through a first unicast channel that corresponds to a third device and that is in the plurality of unicast channels, where the third device is any one of the plurality of second devices; when the packet loss request packet includes a second common identifier and a first identifier of the common data that needs to be retransmitted, obtain, based on the common data indicated by the second common identifier, first indication information corresponding to the first identifier from indication information corresponding to the third device, and use, as retransmission data corresponding to the first unicast channel, common data stored at a storage position indicated by the first indication information; and when the packet loss request packet includes a second differential identifier and a second identifier of the differential data that needs to be retransmitted, obtain, based on the differential data indicated by the second differential identifier, the differential data corresponding to the second identifier from differential data that has been sent but has not been acknowledged and that corresponds to the third device, and use, as the retransmission data corresponding to the first unicast channel, the differential data corresponding to the second identifier.

In a possible implementation, the transceiver module 1301 is further configured to: receive an acknowledgment packet through a second unicast channel that corresponds to a fourth device and that is in the plurality of unicast channels, where the fourth device is any one of the plurality of second devices; when the acknowledgment packet includes a third common identifier and a third identifier of the received common data, delete, based on the common data indicated by the third common identifier, second indication information corresponding to the third identifier from indication information corresponding to the fourth device; when the acknowledgment packet includes a third differential identifier and a fourth identifier of the received differential data, delete, based on the differential data indicated by the third differential identifier, the differential data corresponding to the fourth identifier from differential data that has been sent but has not been acknowledged and that corresponds to the fourth device; and when a plurality of acknowledgment packets are respectively received through the plurality of unicast channels, and the plurality of acknowledgment packets each include the third common identifier and the third identifier, delete common data stored at a storage position indicated by the second indication information.

According to the apparatus provided in this embodiment of this application, one-to-many transmission of common data is implemented through the one multicast channel, so that transmission efficiency of the common data is improved, and resource overheads for transmitting the common data are low. On this basis, in the method, one-to-many transmission of differential data is implemented through the plurality of unicast channels, so that both the common data and differential data can be transmitted in a one-to-many data transmission scenario, and data types for one-to-many data transmission are richer. In addition, different second devices can perform different personalized operations based on the differential data. Therefore, the method can better meet requirements of diversified one-to-many data transmission scenarios.

FIG. 14 is a diagram of a structure of a data transmission apparatus according to an embodiment of this application. The apparatus is used in a second device. The second device is the second device shown in FIG. 6, or the second device is the receiving device shown in FIG. 11. Based on a plurality of modules shown in FIG. 14 below, the data transmission apparatus shown in FIG. 14 can perform all or a part of operations performed by the second device. It should be understood that the apparatus may include more additional modules than the shown modules or a part of the shown modules may be omitted. This is not limited in embodiments of this application. As shown in FIG. 14, the apparatus includes:
a transceiver module 1401, configured to perform a receiving-related operation and/or a sending-related operation performed by the second device in the data transmission method shown in FIG. 6, and a processing module 1402, configured to perform an operation other than the receiving-related operation and/or the sending-related operation performed by the second device in the data transmission method shown in FIG. 6; or a transceiver module 1401, configured to perform a receiving-related operation and/or a sending-related operation performed by the receiving device in the data transmission method shown in FIG. 11, and a processing module 1402, configured to perform an operation other than the receiving-related operation and/or the sending-related operation performed by the receiving device in the data transmission method shown in FIG. 11.

In a possible implementation, the transceiver module includes a receiving module and/or a sending module. The receiving module is configured to perform the receiving-related operation, and the sending module is configured to perform the sending-related operation.

In a possible implementation, the transceiver module 1401 is configured to: receive, through a multicast channel, common data sent by a first device, where the common data is same data; and receive, through a unicast channel, differential data sent by the first device, where respective differential data of a plurality of devices is different.

In a possible implementation, the transceiver module 1401 is further configured to receive, through the unicast channel, retransmission data sent by the first device, where the retransmission data is at least one of common data or differential data that needs to be retransmitted by the second device.

In a possible implementation, a packet in which the common data received through the unicast channel is located carries a first common identifier, and a packet in which the differential data received through the unicast channel is located carries a first differential identifier. The processing module 1402 is configured to: store the common data received through the multicast channel; and identify, based on the first common identifier and the first differential identifier, the packet received through the unicast channel, and separately store the common data and the differential data that are obtained through identification.

In a possible implementation, the transceiver module 1401 is further configured to: when it is determined that common data corresponding to a first identifier needs to be retransmitted, return, to the first device through the unicast channel, a packet loss request packet including a second common identifier and the first identifier of the common data that needs to be retransmitted; and when it is determined that common data corresponding to a third identifier is received, return, to the first device through the unicast channel, an acknowledgment packet including a third common identifier and the third identifier of the received common data.

In a possible implementation, the transceiver module 1401 is further configured to: when it is determined that differential data corresponding to a second identifier needs to be retransmitted, return, to the first device through the unicast channel, a packet loss request packet including a second differential identifier and the second identifier of the differential data that needs to be retransmitted; and when it is determined that differential data corresponding to a fourth identifier is received, return, to the first device through the unicast channel, an acknowledgment packet including a third differential identifier and the fourth identifier of the received differential data.

The apparatus separately receives the common data and the differential data through the multicast channel and the unicast channel, to implement transmission of the common data and the differential data in a one-to-many data transmission scenario, so that data types for one-to-many data transmission are richer. In addition, the second device can perform different personalized operations based on the differential data. Therefore, the method can better meet requirements of diversified one-to-many data transmission scenarios.

It should be understood that, when the apparatus provided in FIG. 13 or FIG. 14 implements functions of the apparatus, division into the foregoing functional modules is merely used as an example for description. During actual application, the foregoing functions may be allocated to different functional modules for implementation based on a requirement. In other words, a device is divided into different functional modules in terms of an inner structure, to implement all or a part of the foregoing functions. In addition, the apparatuses provided in the foregoing embodiments and the method embodiments pertain to a same concept. For specific implementation processes of the apparatuses, refer to the method embodiments. Details are not described herein again.

FIG. 15 is a diagram of a structure of a data transmission device 2000 according to an example embodiment of this application. The data transmission device 2000 shown in FIG. 15 is configured to perform operations related to the data transmission method shown in FIG. 6 or FIG. 11. The data transmission device 2000 is, for example, a data transmission device, an electronic device, a central display screen, or a PAD. The data transmission device 2000 may be implemented by using a general bus architecture.

As shown in FIG. 15, the data transmission device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination implementing a computing function, for example, a combination including one or more microprocessors, or a combination of the DSP and the microprocessor.

Optionally, the data transmission device 2000 further includes a bus. The bus is configured to transfer information between components of the data transmission device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is used to represent the bus in FIG. 15, but this does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disc storage (including compact disc, laser disc, optical disc, digital versatile disc, Blu-ray disc, and the like), a magnetic disk storage medium or another magnetic storage device, or any other medium that can be used to carry or store desired program code in a form of instruction or data structure and that can be accessed by a computer, but is not limited thereto. For example, the memory 2003 exists independently, and is connected to the processor 2001 through the bus. Alternatively, the memory 2003 may be integrated with the processor 2001.

The communication interface 2004 is any apparatus like a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the data transmission device 2000 to communicate with another device.

During specific implementation, in an embodiment, the processor 2001 may include one or more CPUs, for example, a CPU 0 and a CPU 1 shown in FIG. 15. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may include a plurality of processors, for example, the processor 2001 and a processor 2005 shown in FIG. 15. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the data transmission device 2000 may further include an output device and an input device. The output device communicates with the processor 2001, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 2001, and may receive an input of a user in a plurality of manners. For example, the input device may be a mouse, a keyboard, a touchscreen device, a sensor device, or the like.

In some embodiments, the memory 2003 is configured to store program code 2010 for executing the solutions in this application, and the processor 2001 may execute the program code 2010 stored in the memory 2003. In other words, the data transmission device 2000 may implement, by using the processor 2001 and the program code 2010 in the memory 2003, the data transmission method provided in the method embodiments. The program code 2010 may include one or more software modules. Optionally, the processor 2001 may also store program code or instructions for executing the solutions of this application.

In a specific embodiment, the data transmission device 2000 in this embodiment of this application may correspond to the first device in the foregoing method embodiments. The processor 2001 in the data transmission device 2000 reads the instructions in the memory 2003, so that the data transmission device 2000 shown in FIG. 15 can perform all or a part of operations performed by the first device.

Specifically, the processor 2001 is configured to: send common data to a plurality of second devices through one multicast channel, where the common data is same data received by different second devices; and send corresponding differential data to the plurality of second devices through a plurality of unicast channels, where the differential data is different data received by different second devices.

For brevity, another optional implementation is not described herein again.

For another example, the data transmission device 2000 in this embodiment of this application may correspond to the second device in the foregoing method embodiments. The processor 2001 in the data transmission device 2000 reads the instructions in the memory 2003, so that the data transmission device 2000 shown in FIG. 15 can perform all or a part of operations performed by the second device.

Specifically, the processor 2001 is configured to: carry a first common identifier in a packet in which the common data received through the unicast channel is located, and carry a first differential identifier in a packet in which the differential data received through the unicast channel is located. The method further includes: storing the common data received through the multicast channel; and identifying, based on the first common identifier and the first differential identifier, the packet received through the unicast channel, and separately storing the common data and the differential data that are obtained through identification.

For brevity, another optional implementation is not described herein again.

The data transmission device 2000 may further correspond to the data transmission apparatus shown in FIG. 13 or FIG. 14. Each functional module in the data transmission apparatus is implemented by using software of the data transmission device 2000. In other words, the functional modules included in the data transmission apparatus are generated after the processor 2001 of the data transmission device 2000 reads the program code 2010 stored in the memory 2003.

The steps of the data transmission method shown in FIG. 6 or FIG. 11 are completed by using an integrated logic circuit of hardware in the processor of the data transmission device 2000 or instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

An embodiment of this application further provides a data transmission system. The processing system includes a first device and a second device. For example, the first device is the data transmission device 501 shown in FIG. 5 or the data transmission device 2000 shown in FIG. 15, and the second device is the data transmission device 501 shown in FIG. 5 or the data transmission device 2000 shown in FIG. 15. For a data transmission method performed by the first device and the second device, refer to the related descriptions in the embodiment shown in FIG. 6. Details are not described herein again.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform the method that needs to be performed by the first device.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform the method that needs to be performed by the second device.

It should be understood that the processor may be a CPU, or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machine (advanced RISC machine, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, so that a computer implements any one of the foregoing data transmission methods.

An embodiment of this application further provides a computer program (product). When the computer program is executed by a computer, a processor or the computer may be caused to perform corresponding steps and/or procedures in the foregoing method embodiments.

An embodiment of this application further provides a chip, including a processor, configured to: invoke, from a memory, instructions stored in the memory and run the instructions, to cause a communication device on which the chip is mounted to perform any one of the foregoing data transmission methods.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing data transmission methods.

All or a part of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk)), or the like.

A person of ordinary skill in the art may be aware that, method steps and modules described with reference to embodiments disclosed in this specification can be implemented by using software, hardware, firmware, or any combination thereof. To clearly describe interchangeability between the hardware and the software, steps and compositions of embodiments have been usually described in terms of functions in the foregoing descriptions. Whether the functions are performed by using hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or a part of the steps of embodiments may be implemented by using hardware or a program instructing related hardware. The program may be stored in a computer-readable storage medium. The storage medium may be a read-only memory, a magnetic disk, an optical disc, or the like.

When software is used to implement the embodiments, all or a part of the embodiments may be implemented in a form of computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions used for the program module may be executed locally or in a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for detailed working processes of the foregoing described system, device, and module, refer to corresponding processes in the foregoing method embodiments. Details are not described herein again.

In the several embodiments provided in this application, it should be understood that the disclosed system, device, and method may be implemented in other manners. For example, the described device embodiment is merely an example. For example, division of modules is merely division of logical functions and there may be other division modes during actual implementation. For example, a plurality of modules or components may be combined or may be integrated into another system, or some features may be ignored or not executed. In addition, the displayed or discussed mutual couplings or direct couplings or communication connections may be indirect couplings or communication connections implemented through some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. A part or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of software functional module.

If the integrated module is implemented in a form of software functional module and sold or used as an independent product, the integrated module may be stored in a computer-readable storage medium. Based on this understanding, the technical solutions of this application essentially, or the part contributing to the conventional technology, or all or a part of the technical solutions may be implemented in a form of software product. The computer software product is stored in a storage medium, and includes several instructions for instructing a computer device (which may be a personal computer, a server, or a network device) to perform all or a part of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items that have basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and may be separate and different images in some cases.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably in this specification.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any combination and all possible combinations of one or more of the associated listed items. The term "and/or" describes an association relationship between associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the term "if" may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A. B may alternatively be determined based on A and/or other information.

It should be further understood that "one embodiment", "an embodiment", and "a possible implementation" mentioned throughout the specification mean that a specific feature, structure, or characteristic related to the embodiment or implementation is included in at least one embodiment of this application. Therefore, "in one embodiment" or "in an embodiment" or "in a possible implementation" appearing throughout the specification may not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, improvement, or the like made within the principle of this application should fall within the protection scope of this application.

## Claims

1. A data transmission method, wherein the method comprises:
sending, by a first device, common data to a plurality of second devices through one multicast channel, wherein the common data is same data; and
separately sending, by the first device, respective differential data of the plurality of second devices to the plurality of second devices through a plurality of unicast channels, wherein the respective differential data of the plurality of second devices is different.

2. The method according to claim 1, wherein the method further comprises:
separately sending, by the first device, corresponding retransmission data to the plurality of second devices through the plurality of unicast channels, wherein the retransmission data is at least one of common data or differential data that needs to be retransmitted by different second devices.

3. The method according to claim 2, wherein a packet in which the differential data is located carries a first differential identifier, and the first differential identifier is used by the plurality of second devices to identify the differential data received through the unicast channels; and
a packet in which the common data is located carries a first common identifier, and the first common identifier is used by the plurality of second devices to identify the common data received through the unicast channels.

4. The method according to claim 2 or 3, wherein the first device stores indication information corresponding to each of the plurality of second devices and differential data that has been sent but has not been acknowledged, the indication information indicates a storage position of common data that has been sent but has not been acknowledged, and the indication information corresponds to an identifier of the common data that has been sent but has not been acknowledged; and the method further comprises:
receiving a packet loss request packet through a first unicast channel that corresponds to a third device and that is in the plurality of unicast channels, wherein the third device is any one of the plurality of second devices;
when the packet loss request packet comprises a second common identifier and a first identifier of the common data that needs to be retransmitted, obtaining, based on the common data indicated by the second common identifier, first indication information corresponding to the first identifier from indication information corresponding to the third device, and using, as retransmission data corresponding to the first unicast channel, common data stored at a storage position indicated by the first indication information; and
when the packet loss request packet comprises a second differential identifier and a second identifier of the differential data that needs to be retransmitted, obtaining, based on the differential data indicated by the second differential identifier, the differential data corresponding to the second identifier from differential data that has been sent but has not been acknowledged and that corresponds to the third device, and using, as the retransmission data corresponding to the first unicast channel, the differential data corresponding to the second identifier.

5. The method according to any one of claims 1 to 4, wherein the first device stores the indication information corresponding to each of the plurality of second devices and the differential data that has been sent but has not been acknowledged, the indication information indicates the storage position of the common data that has been sent but has not been acknowledged, and the indication information corresponds to the identifier of the common data that has been sent but has not been acknowledged; and the method further comprises:
receiving an acknowledgment packet through a second unicast channel that corresponds to a fourth device and that is in the plurality of unicast channels, wherein the fourth device is any one of the plurality of second devices;
when the acknowledgment packet comprises a third common identifier and a third identifier of the received common data, deleting, based on the common data indicated by the third common identifier, second indication information corresponding to the third identifier from indication information corresponding to the fourth device;
when the acknowledgment packet comprises a third differential identifier and a fourth identifier of the received differential data, deleting, based on the differential data indicated by the third differential identifier, the differential data corresponding to the fourth identifier from differential data that has been sent but has not been acknowledged and that corresponds to the fourth device; and
when a plurality of acknowledgment packets are respectively received through the plurality of unicast channels, and the plurality of acknowledgment packets each comprise the third common identifier and the third identifier, deleting common data stored at a storage position indicated by the second indication information.

6. A data transmission method, wherein the method comprises:
receiving, by a second device through a multicast channel, common data sent by a first device, wherein the second device is one of a plurality of devices that receive the common data, and the common data is same data; and
receiving, by the second device through a unicast channel, differential data sent by the first device, wherein respective differential data of the plurality of devices is different.

7. The method according to claim 6, wherein the method further comprises:
receiving, by the second device through the unicast channel, retransmission data sent by the first device, wherein the retransmission data is at least one of common data or differential data that needs to be retransmitted by different second devices.

8. The method according to claim 6 or 7, wherein a packet in which the common data received through the unicast channel is located carries a first common identifier, and a packet in which the differential data received through the unicast channel is located carries a first differential identifier; and the method further comprises:
storing the common data received through the multicast channel; and
identifying, based on the first common identifier and the first differential identifier, the packet received through the unicast channel, and separately storing the common data and the differential data that are obtained through identification.

9. The method according to claim 8, wherein the method further comprises:
when it is determined that common data corresponding to a first identifier needs to be retransmitted, returning, to the first device through the unicast channel, a packet loss request packet comprising a second common identifier and the first identifier of the common data that needs to be retransmitted; and
when it is determined that common data corresponding to a third identifier is received, returning, to the first device through the unicast channel, an acknowledgment packet comprising a third common identifier and the third identifier of the received common data.

10. The method according to claim 8 or 9, wherein the method further comprises:
when it is determined that differential data corresponding to a second identifier needs to be retransmitted, returning, to the first device through the unicast channel, a packet loss request packet comprising a second differential identifier and the second identifier of the differential data that needs to be retransmitted; and
when it is determined that differential data corresponding to a fourth identifier is received, returning, to the first device through the unicast channel, an acknowledgment packet comprising a third differential identifier and the fourth identifier of the received differential data.

11. A data transmission apparatus, wherein the apparatus is used in a first device, and the apparatus comprises:
a transceiver module, configured to perform a receiving-related operation and/or a sending-related operation in the method according to any one of claims 1 to 5; and
a processing module, configured to perform an operation other than the receiving-related operation and/or the sending-related operation in the method according to any one of claims 1 to 5.

12. A data transmission apparatus, wherein the apparatus is used in a second device, and the apparatus comprises:
a transceiver module, configured to perform a receiving-related operation and/or a sending-related operation in the method according to any one of claims 6 to 10; and
a processing module, configured to perform an operation other than the receiving-related operation and/or the sending-related operation in the method according to any one of claims 6 to 10.

13. A data transmission device, wherein the data transmission device comprises a processor, the processor is coupled to a memory, the memory stores at least one program instruction or code, and the at least one program instruction or code is loaded and executed by the processor, so that the data transmission device implements the data transmission method according to any one of claims 1 to 5, or the data transmission device implements the data transmission method according to any one of claims 6 to 10.

14. A data transmission system, wherein the data transmission system comprises a first device and a plurality of second devices; and
the first device is configured to perform the data transmission method according to any one of claims 1 to 5, and any one of the plurality of second devices is configured to perform the data transmission method according to any one of claims 6 to 10.

15. A computer-readable storage medium, wherein the computer storage medium stores at least one instruction, and the at least one instruction is loaded and executed by a processor, so that a computer implements the data transmission method according to any one of claims 1 to 10.

16. A computer program product, wherein the computer program product comprises computer program code, and the computer program code is loaded and executed by a computer, so that the computer implements the data transmission method according to any one of claims 1 to 10.
